(19) Europäisches Patentamt
European Patent Office
Office européen des brevets

(11) EP 2 443 176 B1

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(21) Anmeldenummer: **10725997.0**

(22) Anmeldetag: **17.06.2010**

(51) Int Cl.:
***C08G 73/18*** *(2006.01)*

(86) Internationale Anmeldenummer:
**PCT/EP2010/003671**

(87) Internationale Veröffentlichungsnummer:
**WO 2010/145828 (23.12.2010 Gazette 2010/51)**

# (54) VERFAHREN ZUR HERSTELLUNG EINES HOCHMOLEKULAREN POLYAZOLS

METHOD FOR THE PRODUCTION OF A HIGH-MOLECULAR POLYAZOLE

PROCÉDÉ DE PRÉPARATION D'UN POLYAZOL

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.06.2009 EP 09008110**
**15.12.2009 EP 09015457**

(43) Veröffentlichungstag der Anmeldung:
**25.04.2012 Patentblatt 2012/17**

(73) Patentinhaber: **BASF SE**
**67056 Ludwigshafen am Rhein (DE)**

(72) Erfinder:
- **BELACK, Jörg**
**55129 Mainz (DE)**
- **LEITNER, Klaus**
**67063 Ludwigshafen (DE)**
- **SCUPIN, Hans-Joachim**
**67069 Ludwigshafen (DE)**
- **UENSAL, Oemer**
**55128 Mainz (DE)**

(74) Vertreter: **Dörr, Klaus**
**Dörr IP**
**Nordring 29**
**65719 Hofheim (DE)**

(56) Entgegenhaltungen:
**WO-A1-99/04445**
**WO-A1-02/088219**
**WO-A1-2008/031554**
**WO-A2-03/022412**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 443 176 B1

## Beschreibung

Die vorliegende Erfindung betrifft ein Verfahren zur Herstellung eines hochmolekularen Polyazols, welches insbesondere zur Herstellung von Polymer-Elektrolyt-Membranen, bevorzugt zur Herstellung von Membran-Elektroden-Einheiten für Brennstoffzellen verwendet werden kann.

Polymer-Elektrolyt-Membranen (PEM) sind bereits bekannt und werden insbesondere in Brennstoffzellen eingesetzt. Dabei finden häufig Sulfonsäuremodifizierte Polymere, insbesondere perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks üblicherweise auf 80 - 100°C. Unter Druck kann die Betriebstemperatur auf >120°C erhöht werden. Ansonsten können höhere Betriebstemperaturen ohne einen Leistungsverlust der Brennstoffzelle nicht realisiert werden.

Aus systemtechnischen Gründen sind aber höhere Betriebstemperaturen als 100°C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser. Insbesondere sind bei der Verwendung von sogenannten Reformaten aus Kohlenwasserstoffen deutliche Mengen an Kohlenmonoxid im Reformergas enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen bis auf mehrere Vol.-% CO an.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass in Brennstoffzellensystemen, die bei Temperaturen über 100°C betrieben werden, die Abwärme deutlich besser nutzbar gemacht und somit die Brennstoffzellensystem-Effizienz durch Strom-Wärmekopplung gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine elektrische Leitfähigkeit zeigen. Eine erste Entwicklung in diese Richtung wird beispielsweise WO 96/13872 aufgezeigt. So offenbart WO 96/13872 die Verwendung von säuredotierten Polybenzimidazol-Membranen, die durch ein Gießverfahren hergestellt werden. Aus WO 2008/031554 ist ein Extrusionsverfahren zur Herstellung Polyazol-Membranen bekannt. Ein weiteres Verfahren zur Herstellung von Polyazol-Membranen wird in WO 03/022412 offenbart und WO 99/04445 offenbart die Herstellung von Polybenzimidazol Gelen.

Eine neue Generation von säurehaltigen Polyazol-Membranen, die ebenfalls ohne den Einsatz von Wasser eine elektrische Leitfähigkeit zeigen, wird in der WO 02/088219 beschrieben. Diese Anmeldung offenbart eine protonenleitende Polymermembran auf Basis von Polyazolen, die durch ein Verfahren, umfassend die folgenden Schritte, erhältlich ist

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion,

B) Aufbringen einer Schicht unter Verwendung der Mischung gemäß Schritt A) auf einem Träger, ggf. auf einer Elektrode,

C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren,

D) Behandlung der in Schritt C) gebildeten Membran bis diese selbsttragend ist, bevorzugt durch partielle Hydrolyse.

Die in Schritt A) verwendete Polyphosphorsäure weist üblicherweise einen Gehalt, berechnet als $P_2O_5$ (acidimetrisch), von mindestens 83% auf.

Zur Einstellung der Viskosität kann die Lösung ggf. mit Phosphorsäure (konz. Phosphorsäure, 85%) versetzt werden.

In den Beispielen werden zahlreiche Synthesen in einer Polyphosphorsäure beschrieben, die einen Gehalt, berechnet als $P_2O_5$ (acidimetrisch), von 83,4% aufweist.

Die Kondensation der Monomere wird in der Regel durch eine Temperaturrampe von 120°C bis zu 220°C initiiert, wobei die Bildung der hochmolekularen Polymere am Ende bei den hohen Temperaturen erfolgt.

In Beispiel 3 wird eine Monomermischung mit einem Monomer-Feststoffgehalt von 11,2 % schrittweise sogar auf 240°C erwärmt.

Manche der Ansätze werden anschließend mit konz. Phosphorsäure verdünnt und dann ggf. auf 240°C erhitzt. Unter den in diesem Zusammenhang genannten Bedingungen findet jedoch keine nennenswerte Polykondensation

mehr statt.

Der Gehalt der resultierenden Lösungen, berechnet als $P_2O_5$ (acidimetrisch), beträgt entweder höchstens 70,487752 % (=theoretische $H_3PO_4$-Konzentration: 97,3%; Beispiel 5) oder mindestens 75,465388 % (=theoretische $H_3PO_4$-Konzentration: 104,2%; Beispiel 3).

Die intrinsische Viskosität der Polymere bei 30°C ist 2,9 dL/g oder weniger.

Für die Anwendung wären jedoch höhere Molekulargewichte (inhärente Viskositäten) wünschenswert. Diese könnten grundsätzlich dadurch erreicht werden, dass man das Reaktionsgemisch auf höhere Temperaturen als 220°C erwärmt und/oder eine Polyphosphorsäure mit einem höheren $P_2O_5$-Gehalt einsetzt. Allerdings bereitet die Reaktionskontrolle der Polykondensation der in dieser Druckschrift beschriebenen Ansätze unter solchen Bedingungen erhebliche Probleme, da die Polykondensationsgeschwindigkeit mit steigender Temperatur oder höherer $P_2O_5$-Konzentration deutlich zunimmt. Die Folge ist, dass die Polykondensation extrem schnell verläuft und nicht mehr definiert, z. B. bei einem vorgegebenen Molekulargewicht, abgebrochen werden kann. Im Gegenteil kann die stark ansteigende Viskosität der Reaktionsmischung im ungünstigsten Fall zu einer Verfestigung des Reaktionsgemisches innerhalb des Reaktors führen. Die resultierenden Zusammensetzungen fließen dann nicht mehr und können auch nicht mehr aus dem Reaktor abgelassen werden. Bei großen Ansatzmengen müssen Reaktoren dann aufwendig zurückgebaut und gereinigt werden. Des Weiteren ist der Reaktor zeitweise nicht für weitere Reaktionen nutzbar und das mechanische Entfernen von verfestigtem Reaktionsprodukt kann zu einer Beschädigung beschichteter Kesselwände führen. Eine einfache Reinigung durch Zugabe eines Lösungsmittels ist ebenfalls nicht möglich, da der Kessel bei der Reaktion immer fast vollständig befüllt wird.

Aufgabe der vorliegenden Erfindung war daher, effizientere Möglichkeiten zur Herstellung von Polyazolen mit hohem Molekulargewicht aufzuzeigen. Gewünscht wurde insbesondere ein Verfahren, welches zur Herstellung von Polyazol-Membranen genutzt werden kann und eine leichte und effiziente Weiterverarbeitung derartiger Polyazol-Membranen, insbesondere bei der Herstellung von Membran-Elektroden-Einheiten, bevorzugt für Brennstoffzellen, ermöglicht. Insbesondere sollte eine bessere Reaktionskontrolle der Polykondensation gewährleistet werden und es wurde die Möglichkeit eines definierten Abbruchs der Reaktion, z. B. bei einem vorgegebenen Molekulargewicht, gewünscht. Darüber hinaus sollte die Raum-Zeit-Ausbeute der herkömmlichen Verfahren verbessert und eine Beschädigung des Reaktors bestmöglich vermieden werden. Ferner wurde die Möglichkeit einer einfachen Reinigung des Reaktors bei Bedarf gewünscht. Schließlich sollten auch eine einfache Weiterverarbeitung der Polymere sowie die Herstellung dünner, defektfreier Membranen und selbstragender Filme möglich sein. Dabei wurde insbesondere die Zumischbarkeit von Additiven, wie z. B. Vernetzer, Füllstoffe o. ä., ohne signifikante Beeinflussung der Fließeigenschaften der Polymere oder Membranen angestrebt. Weiterhin sollten die Polymere und Membranen möglichst verbesserte Eigenschaften, wie überlegene mechanischen Eigenschaften, insbesondere eine höhere Zugfestigkeit und/oder eine verbesserte mechanische Stabilität, aufweisen. Dabei sollten die angestrebten Vorteile und Effekte auf möglichst einfache Art und Weise, großtechnisch und kostengünstig realisiert werden können.

Gelöst werden diese Aufgaben durch die Bereitstellung eines Verfahrens mit allen Merkmalen des Anspruchs 1. Besonders zweckmäßige Vorgehensweisen werden in den abhängigen Unteransprüchen beschrieben.

- Gegenstand der vorliegenden Erfindung ist dementsprechend ein Verfahren gemäß Ansruch 1 sowie den Unteransprüchen 2 bis 12.

Weiterhin

- erwärmt man in Schritt ii) vorzugsweise eine Mischung, die eine Konzentration von Polyphosphorsäure, berechnet als $P_2O_5$ (acidimetrisch), bezogen auf die Gesamtmenge an $H_3PO_4$, Polyphosphorsäure und Wasser in der Mischung, kleiner 85,47 %, bevorzugt kleiner 84,74 %, insbesondere kleiner 84,02 %, aufweist,
- wählt man die Mengen der Komponenten in Schritt i) vorzugsweise derart, dass der Gewichtsanteil der Tetra-Amino-Verbindungen und der aromatischen Carbonsäuren bzw. deren Ester, die mindestens zwei Säuregruppen pro Carbonsäure-Monomer enthalten, oder der Diaminocarbonsäuren der Mischung in Schritt ii), bezogen auf das Gesamtgewicht der Mischung, größer 0,1 Gew.-%, bevorzugt größer 0,5 Gew.-%, besonders bevorzugt größer 1,0 Gew.-%, zweckmäßigerweise größer 1,5 Gew.-%, insbesondere größer 2,0 Gew.-%, ist,
- wählt man die Reaktionstemperatur in Schritt ii) vorzugsweise kleiner 300°C, bevorzugt kleiner 290°C, besonders bevorzugt kleiner 280°C, insbesondere kleiner 270°C ist.

Das erfindungsgemäße Verfahren dient der Herstellung eines Polyazols. Unter Polyazolen im Sinne der vorliegenden Erfindung werden solche Polymere verstanden, bei denen die Wiederholungseinheit im Polymer vorzugsweise mindestens einen aromatischen Ring mit mindestens einem Stickstoffatom enthält. Bei dem aromatischen Ring handelt es sich vorzugsweise um einen fünf- oder sechsgliedrigen Ring mit einem bis drei Stickstoffatomen, der mit einem anderen Ring, insbesondere einem anderen aromatischen Ring, anelliert sein kann. Einzelne Stickstoff-Heteroatome können dabei auch durch Sauerstoff-, Phosphor- und/oder Schwefel-Atome ersetzt sein. Die heterocyclischen aromatischen Ringe liegen vorzugsweise in der Polymerhauptkette vor, können jedoch auch in der Seitenkette vorliegen.

Besonders bevorzugt werden solche basischen Polymere, die in der Wiederholungseinheit ungesättigte fünfgliedrige oder sechsgliedrige aromatische Einheiten umfassen, die im Kern 1-5 Stickstoffatome oder neben Stickstoffatomen ein oder mehrere andere Heteroatome enthalten.

Das resultierende Polyazol, bevorzugt ein Polybenzimidazol, weist ein hohes Molekulargewicht auf. Gemessen als intrinsische Viskosität ist dieses größer 2,9 dL/g und beträgt vorzugsweise mindestens 3,0 dL/g, bevorzugt mindestens 3,5 dL/g, besonders bevorzugt mindestens 4,0 dL/g, insbesondere mindestens 4,5 dL/g. Die Obergrenze liegt vorzugsweise bei 8,0 dL/g, bevorzugt bei 7,0 dL/g, besonders bevorzugt bei 6,0 dL/g, insbesondere bei 5,5 dl/g. Das Molekulargewicht liegt somit deutlich über der des handelsüblichen Polybenzimidazols (IV < 1,1 dl/g).

Die Bestimmung der Intrinsischen Viskosität erfolgt wie nachfolgend beschrieben: Hierzu wird das Polymer zunächst bei 160°C während 2h getrocknet. 100 mg des so getrockneten Polymers werden dann während 4h bei 80°C in 100 ml von konzentrierter Schwefelsäure (min. 96 Gew.%) gelöst. Die inhärente bzw. intrinsische Viskosität wird aus dieser Lösung gemäß ISO 3105 (DIN 51562, ASTM D2515) mit einem Ubbelhode Viskosimeter bei einer Temperatur von 25°C ermittelt.

Weitere Informationen zur inhärenten Viskosität und den zugehörigen Bestimmungsverfahren können der gängigen Fachliteratur, z. B. Ullmann 1, 67-85; (4.) 5, 755-778, entnommen werden, deren Offenbarung hiermit durch Bezugnahme eingeschlossen wird.

Das resultierende Polyazol enthält vorzugsweise wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII)

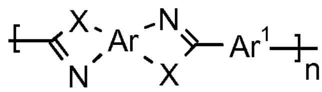

(I)

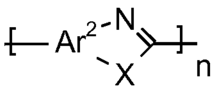

(II)

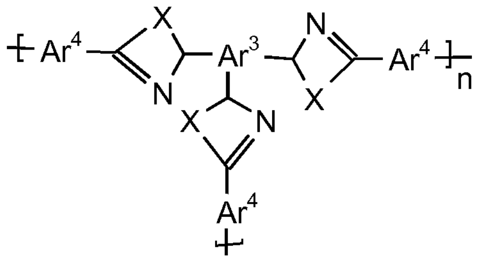

(III)

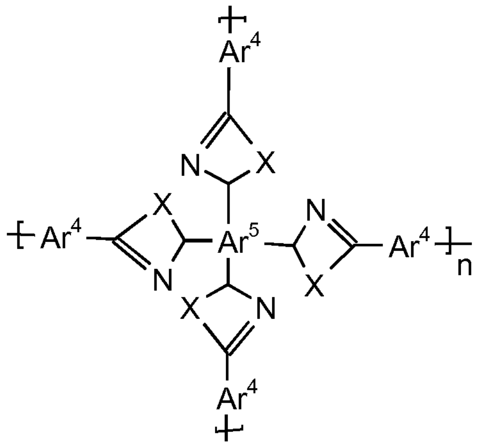

(IV)

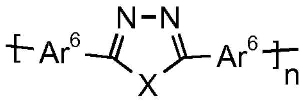 (V)

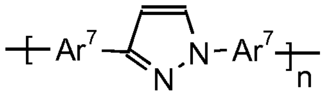 (VI)

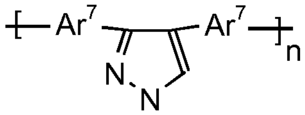 (VII)

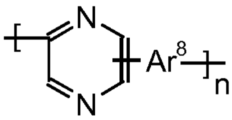 (VIII)

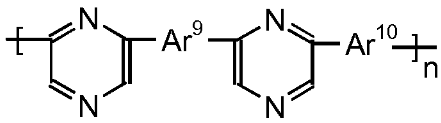 (IX)

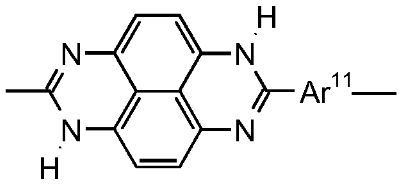 (X)

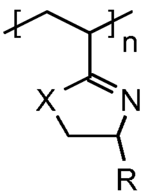 (XI)

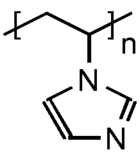 (XII)

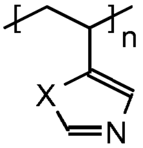 (XIII)

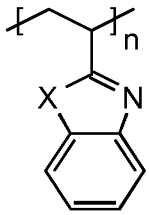

(XIV)

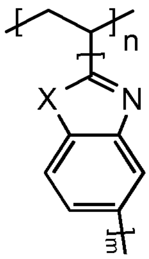

(XV)

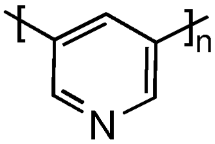

(XVI)

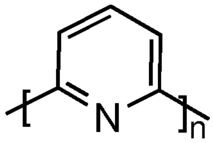

(XVII)

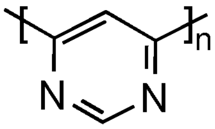

(XVIII)

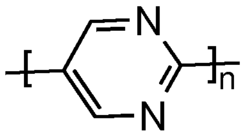

(XIX)

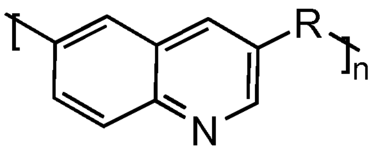

(XX)

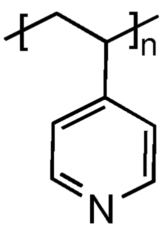

(XXI)

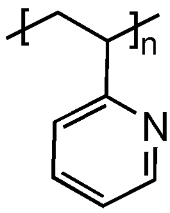

(XXII)

worin

Ar gleich oder verschieden sind und für eine vierbindige aromatische oder heteroaromatische Gruppe stehen, die ein- oder mehrkernig sein kann,

$Ar^1$ gleich oder verschieden sind und für eine zweibindige aromatische oder heteroaromatische Gruppe stehen, die ein- oder mehrkernig sein kann,

$Ar^2$ gleich oder verschieden sind und für eine zwei oder dreibindige aromatische oder heteroaromatische Gruppe stehen, die ein- oder mehrkernig sein kann,

$Ar^3$ gleich oder verschieden sind und für eine dreibindige aromatische oder heteroaromatische Gruppe stehen, die ein- oder mehrkernig sein kann,

$Ar^4$ gleich oder verschieden sind und für eine dreibindige aromatische oder heteroaromatische Gruppe stehen, die ein- oder mehrkernig sein kann,

$Ar^5$ gleich oder verschieden sind und für eine vierbindige aromatische oder heteroaromatische Gruppe stehen, die ein- oder mehrkernig sein kann,

$Ar^6$ gleich oder verschieden sind und für eine zweibindige aromatische oder heteroaromatische Gruppe stehen, die ein- oder mehrkernig sein kann,

$Ar^7$ gleich oder verschieden sind und für eine zweibindige aromatische oder heteroaromatische Gruppe stehen, die ein- oder mehrkernig sein kann,

$Ar^8$ gleich oder verschieden sind und für eine dreibindige aromatische oder heteroaromatische Gruppe stehen, die ein- oder mehrkernig sein kann,

$Ar^9$ gleich oder verschieden sind und für eine zwei- oder drei- oder vierbindige aromatische oder heteroaromatische Gruppe stehen, die ein- oder mehrkernig sein kann,

$Ar^{10}$ gleich oder verschieden sind und für eine zwei- oder dreibindige aromatische oder heteroaromatische Gruppe stehen, die ein- oder mehrkernig sein kann,

$Ar^{11}$ gleich oder verschieden sind und für eine zweibindige aromatische oder heteroaromatische Gruppe stehen, die ein- oder mehrkernig sein kann,

X gleich oder verschieden ist und für Sauerstoff, Schwefel oder eine Aminogruppe steht, die ein Wasserstoffatom, eine 1-20 Kohlenstoffatome aufweisende Gruppe, vorzugsweise eine verzweigte oder nicht verzweigte Alkyl- oder Alkoxygruppe, oder eine Arylgruppe als weiteren Rest trägt

R in allen Formeln außer Formel (XX) gleich oder verschieden für Wasserstoff, eine Alkylgruppe oder eine aromatische Gruppe und in Formel (XX) für eine Alkylengruppe oder eine aromatische Gruppe steht und

n, m jeweils eine ganze Zahl größer gleich 10, bevorzugt größer gleich 100 sind.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen, wie z. B. Methyl- oder Ethylgruppen.

Bevorzugt sind Polyazole mit wiederkehrenden Einheiten der Formel (I) bei denen die Reste X innerhalb einer

wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine) und Poly(tetrazapyrene).

In einer weiteren Ausführungsform der vorliegenden Erfindung ist das Polyazol ein Copolymer, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polyazol ein Homopolymer, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

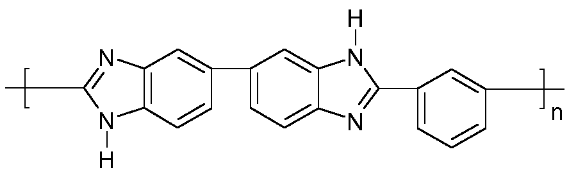

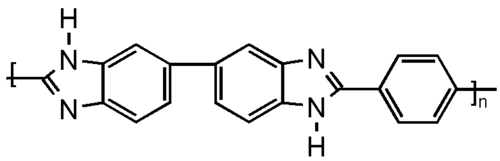

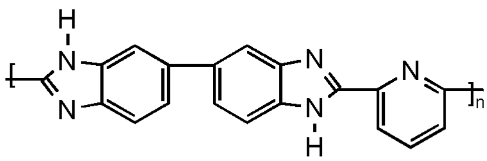

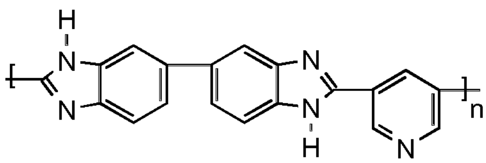

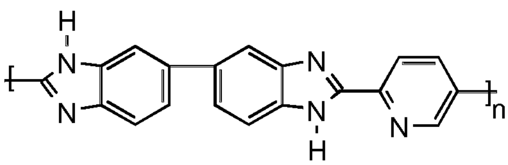

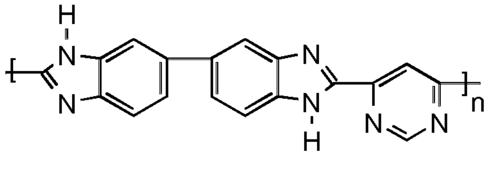

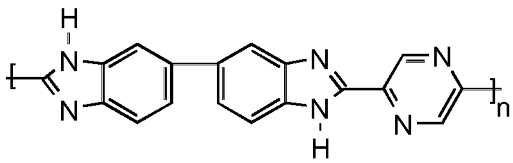

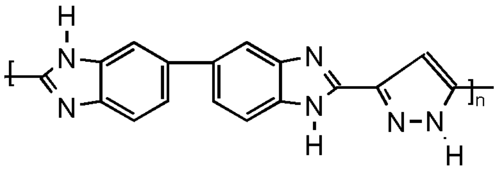

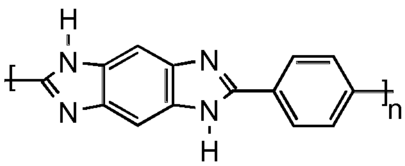

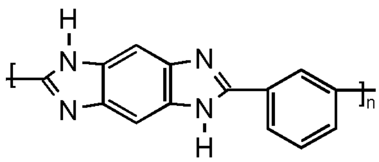

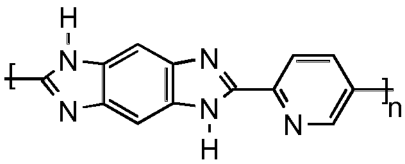

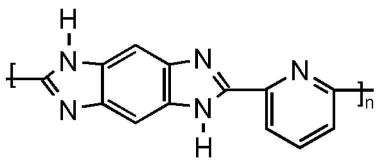

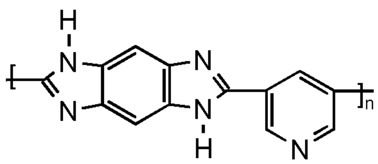

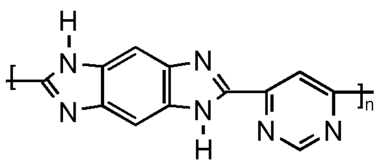

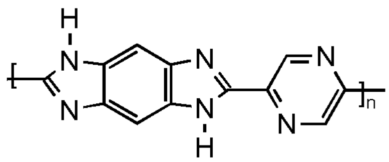

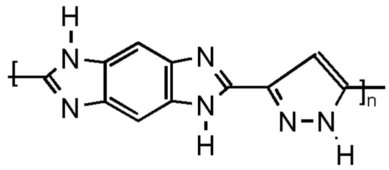

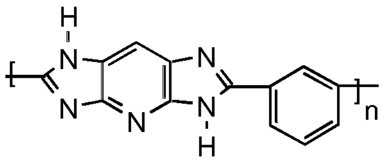

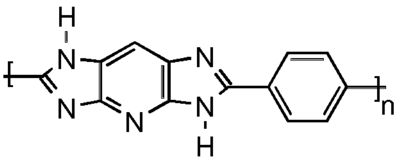

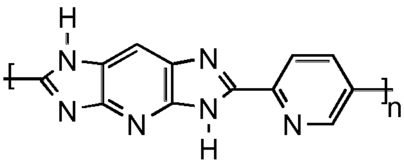

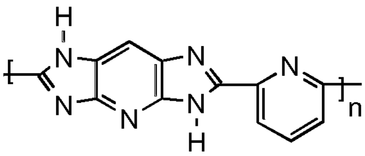

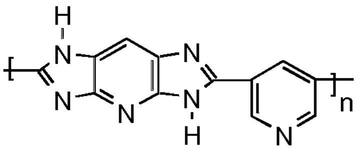

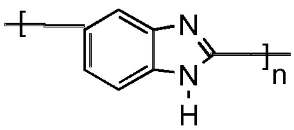

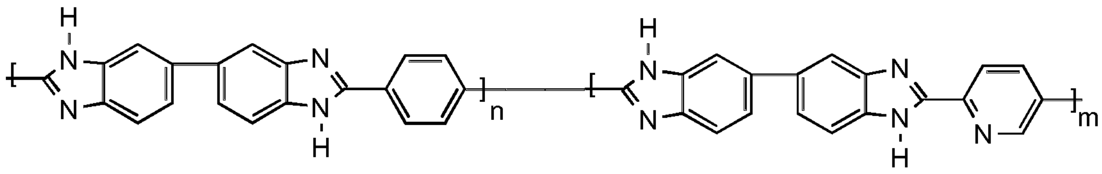

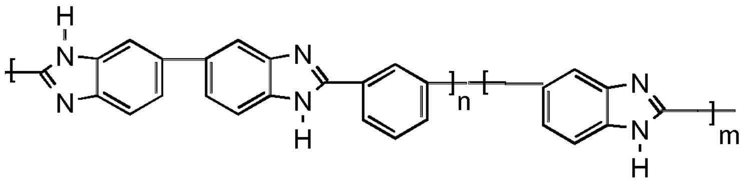

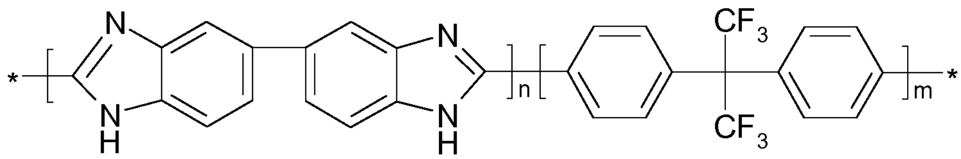

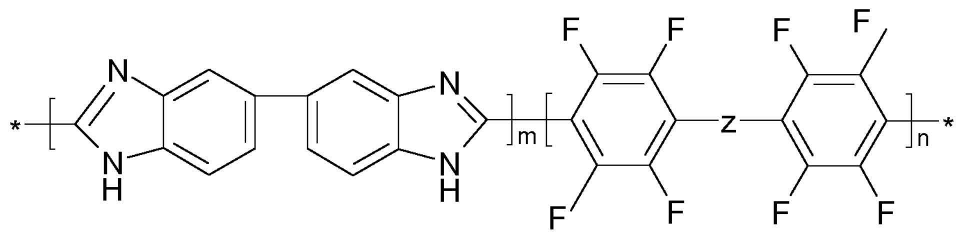

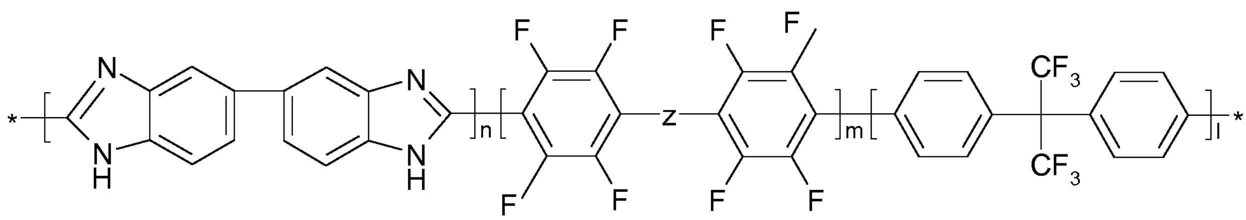

In der letzten Formel können die Azol-Einheiten und die beiden fluorierten Anteile in beliebiger Reihenfolge miteinander verknüpft sein. Die Herstellung kann als Polymer, statisches Copolymer oder Blockcopolymer erfolgen.

Weiterhin sind in den obigen Formeln n und m, jeweils unabhängig voneinander, eine ganze Zahl größer gleich 10, vorzugsweise größer gleich 100.

Im Rahmen einer besonders bevorzugten Variante der vorliegenden Erfindung weisen die Polyazole mindestens eine Sulfonsäure- und/oder Phosphonsäuregruppe auf. Derartige Polymere werden in der Druckschrift DE 102 46 459 A1 beschrieben, deren Offenbarung hiermit durch Bezugnahme mit aufgenommen wird.

Bevorzugte Polybenzimidazole sind unter dem Handelsnamen ®Celazole oder auch ®Hozole (Fa. Hostec, Österreich) kommerziell erhältlich.

Die Herstellung der Polyazole erfolgt durch Umsetzung von einer oder mehreren aromatischen und/oder heteroaromatischen Tetra-Amino-Verbindungen mit einer oder mehreren aromatischen und/oder heteroaromatischen Carbonsäuren oder deren Derivate, die mindestens zwei Säuregruppen pro Carbonsäure-Monomer umfassen. Alternativ können auch eine oder mehrere aromatische und/oder heteroaromatische Diaminocarbonsäuren zur Herstellung von Polyazolen eingesetzt werden.

Zu den einsetzbaren aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Bei den aromatischen und/oder heteroaromatischen Carbonsäuren handelt es sich bevorzugt um Dicarbonsäuren und Tricarbonsäuren und Tetracarbonsäuren oder deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren oder deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren oder deren C1-C20-Alkyl-Ester oder C5-C12-Aryl-Ester oder deren Säureanhydride oder deren Säurechloride handelt es sich bevorzugt um 3,5,3',5'-Biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren handelt es sich bevorzugt um heteroaromatische Dicarbonsäuren und Tricarbonsäuren und Tetracarbonsäuren oder deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure sowie deren C1-C20-Alkyl-Ester oder C5-C12-Aryl-Ester, oder deren Säureanhydride oder deren Säurechloride.

Der Gehalt an Tricarbonsäure oder Tetracarbonsäuren (bezogen auf eingesetzte Dicarbonsäure) beträgt vorzugsweise zwischen 0 und 30 Mol-%, vorzugsweise 0,1 und 20 Mol %, insbesondere 0,5 und 10 Mol-%.

Des Weiteren können auch aromatische und heteroaromatische Diaminocarbonsäuren eingesetzt werden. Zu diesen gehört unter anderem Diaminobenzoesäure, 4-Phenoxycarbonyl-3,'4'-diaminodiphenylether und deren Mono- und Dihydrochloridderivate.

Bevorzugt werden Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise zwischen 1:50 bis 50:1.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Das Molverhältnis von Carbonsäuregruppen zu Aminogruppen bei der Umsetzung von Tetra-Amino-Verbindungen mit einer oder mehreren aromatischen Carbonsäuren oder deren Estern, die mindestens zwei Säuregruppen pro Carbonsäure-Monomer enthalten, liegt vorzugsweise in der Nähe von 1:2.

Bevorzugt werden mindestens 0,5 Gew.-%, insbesondere 1 bis 30 Gew.-% und besonders bevorzugt 2 bis 15 Gew.-% Monomere zur Herstellung von Polyazolen eingesetzt, jeweils bezogen auf das resultierende Gewicht der zu verwendenden Zusammensetzung.

Insofern auch Tricarbonsäuren oder Tetracarbonsäre eingesetzt werden, wird hierdurch eine Verzweigung/ Vernetzung des gebildeten Polymeren erzielt. Diese trägt zur Verbesserung der mechanischen Eigenschaft bei.

Zur Polymerisation werden das oder die Monomere für eine geeignete Zeitspanne, bevorzugt länger als eine Minute, besonders bevorzugt länger als 30 Minuten, vorzugsweise länger als 1 Stunde, ganz besonders bevorzugt länger als 2 Stunden, noch mehr bevorzugt länger als 4 Stunden, am meisten bevorzugt länger als 6 Stunden, insbesondere länger als 8 Stunden, auf die vorstehend genannten Temperaturen erwärmt. Die Temperaturerhöhung kann

dabei kontinuierlich oder auch diskontinuierlich erfolgen. Besonders bewährt hat sich eine Vorgehensweise, bei welcher man die Temperatur schrittweise bis auf die Endtemperatur erhöht.

Gemäß einem weiteren Aspekt der vorliegenden Erfindung werden Verbindungen verwendet, die unter Einwirkung von Wärme zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Als Polyphosphorsäure $H_{n+2}P_nO_{3n+1}$ (n>1) kann handelsübliche Polyphosphorsäure eingesetzt werden, wie sie beispielsweise von Riedel-de Haen erhältlich ist.

Die in Schritt i) erzeugte Mischung weist vorzugsweise ein Gewichtsverhältnis Polyphosphorsäure zu Summe aller Monomere von 1:10000 bis 10000:1, vorzugsweise 1:1000 bis 1000:1, insbesondere 1:100 bis 100:1, auf.

Gemäß einer besonders bevorzugten Ausführungsform der vorliegenden Erfindung verringert man in Schritt ii) die Konzentration der Polyphosphorsäure in der Mischung, berechnet als $P_2O_5$ (acidimetrisch), bezogen auf die Gesamtmenge an $H_3PO_4$, Polyphosphorsäure und Wasser in der Mischung. Dies erfolgt vorzugsweise durch Zugabe von ortho-Phosphorsäure ($H_3PO_4$) oder von Wasser.

Die Konzentration der Polyphosphorsäure in der Mischung, berechnet als $P_2O_5$ (acidimetrisch), bezogen auf die Gesamtmenge an $H_3PO_4$, Polyphosphorsäure und Wasser in der Mischung, beträgt nach der Konzentrationsverringerung vorzugsweise kleiner 85,47 %, bevorzugt kleiner 84,74 %, insbesondere kleiner 84,02 %.

Besonders bevorzugt wird die Zugabe einer Zusammensetzung in Form einer Lösung und/oder Dispersion, die

- ◦ mindestens ein Polyazol mit einer intrinsischen Viskosität, gemessen in mindestens 96 Gew.-%-iger Schwefelsäure, im Bereich von 3,0 bis 8,0 g/dL, und
- ◦ ortho-Phosphorsäure und/oder Polyphosphorsäure umfasst,

wobei

- ▪ der Gehalt an Polyazol, bezogen auf das Gesamtgewicht der Zusammensetzung, im Bereich von 0,5 Gew.-% bis 30,0 Gew.-%, bevorzugt im Bereich von 1,0 Gew.-% bis 20,0 Gew.-%, besonders bevorzugt im Bereich von 1,5 Gew.-% bis 10,0 Gew.-%, insbesondere im Bereich von 1,7 Gew.-% bis 5,0 Gew.-%, liegt,
- ▪ der Gehalt an $H_3PO_4$ und/oder Polyphosphorsäure, bezogen auf das Gesamtgewicht der Zusammensetzung, im Bereich von 30,0 Gew.-% bis 99,5 Gew.-%, bevorzugt im Bereich von 40,0 Gew.-% bis 99,0 Gew.-%, besonders bevorzugt im Bereich von 60,0 Gew.-% bis 98,5 Gew.-%, insbesondere im Bereich von 85,0 Gew.-% bis 95,0 Gew.-%, liegt,
- ▪ die Konzentration der $H_3PO_4$ und/oder Polyphosphorsäure, berechnet als $P_2O_5$ (acidimetrisch), bezogen auf die Gesamtmenge an $H_3PO_4$ und/oder Polyphosphorsäure und/oder Wasser, im Bereich von 70,5 % bis 75,45 %, bevorzugt im Bereich von 71,0 % bis 75,0 %, besonders bevorzugt im Bereich von 71,5 % bis 74,0 %, ganz besonders bevorzugt im Bereich von 71,7 % bis 73,0 %, insbesondere im Bereich von 72,0 % bis 72,4 %, liegt.

Die Menge der zuzusetzenden Zusammensetzung liegt vorzugsweise im Bereich von 0,1 Gew.-% bis 50,0 Gew.-%, bevorzugt im Bereich von 0,5 Gew.-% bis 40,0 Gew.-%, insbesondere im Bereich von 1,0 Gew.-% bis 30,0 Gew.-%, jeweils bezogen auf das Gesamtgewicht der Mischung aus Schritt i).

Die in diesem Zusammenhang einsetzbare Zusammensetzung liegt als Dispersion und/oder Lösung vor und kann ggf. geringe Feststoffanteile und/oder Gelanteile umfassen. Besonders bevorzugt ist der Anteil abfiltrierbarer Bestandteile jedoch kleiner 30,0 Gew.-%, vorzugsweise kleiner 10,0 Gew.-%, bevorzugt kleiner 5,0 Gew.-%, besonders bevorzugt kleiner 3,0 Gew.-%, insbesondere kleiner 1,0 Gew.-%, jeweils bezogen auf das Gesamtgewicht der Zusammensetzung. Die Bestimmung der abfiltrierbaren Mengen erfolgt dabei günstigerweise bei 160 °C. Weiterhin werden vorzugsweise Siebe mit Sieböffnungen (Maschen) kleiner 1,0 mm, bevorzugt kleiner 500 $\mu$m, besonders bevorzugt kleiner 100 $\mu$m, eingesetzt. Zur weiteren Verbesserung der anwendungstechnischen Eigenschaften können der Zusammensetzung zusätzlich noch Füllstoffe, insbesondere protonenleitende Füllstoffe, sowie zusätzliche Säuren zugesetzt werden.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, |

| | |
|---|---|
| | $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Phosphide wie | ZrP, TiP, HfP |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite, andere Kondensationsprodukte der Orthokieselsäure $Si(OH)_4$ sowie deren Salze und Ester, Polysiloxane der allg. Formel $H_3Si-(O-SiH_2-)_n-O-SiH_3$, speziell auch andere Tonmineralien, wie Montmorrillonite, Bertonite, Kaolinite, Pyrophillite, Talkum, Chlorite, Muscovite, Glimmer, Smectite, Halosite, Vermiculite und Hydrotalcite. |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, Vliesse oder Gewebe, bevorzugt auf Basis von Polyazolen und/oder Polyaryletherketonen oder Polyarylethersulfonen, auch teilvernetzt. Die Füllstoffe können auch teilweise oder vollständig, bezogen auf den Aromatenanteil, durch geladene Gruppen modifiziert sein, wobei in diesen Zusammenhang Sulfonsäuregruppen, Phosphonsäuregruppen, Phosphatgruppen und/oder andere anionische oder kationische geladene Gruppen besonders geeignet sind. |

Diese Additive können in der Zusammensetzung in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im Allgemeinen umfasst die resultierende Membran höchstens 80 Gew.-%, vorzugsweise höchstens 50 Gew.-% und besonders bevorzugt höchstens 20 Gew.-% Additive.

Als weiteres kann die Zusammensetzung auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorption von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind:
Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Die Herstellung der Zusammensetzung kann durch einfaches Mischen der Komponenten erfolgen. Alternativ ist auch die Aufkonzentration von $H_3PO_4$ und/oder Polyphosphorsäure-haltigen Zusammensetzungen mit niedrigerer $P_2O_5$-Konzentration oder die Verdünnung von solchen Zusammensetzungen mit höherer $P_2O_5$-Konzentration, d. h. die Entfernung oder die Zuführung von Wasser denkbar.

Hierbei ist jedoch zu beachten, dass in manchen Fällen, insbesondere bei tiefen Temperaturen und/oder hohen Feststoffgehalten, das Auflösen oder Dispergieren des Polyazols in der ortho-Phosphorsäure und/oder Polyphosphorsäure, kinetisch gehemmt ist. Die Zusammensetzung liegt dann zunächst inhomogen vor. Bei höheren Temperaturen größer 100°C kommt es zusätzlich zur Verdampfung von Wasser aus der Zusammensetzung mit der Folge, dass sich die Konzentration der $H_3PO_4$ und/oder Polyphosphorsäure mit der Zeit verändert.

Zweckmäßigerweise erfolgt daher die Herstellung der Zusammensetzung nach einem Verfahren, bei welchem man

a) mindestens ein Polyazol in ortho-Phosphorsäure und/oder Polyphosphorsäure auflöst und/oder dispergiert, wobei man die Konzentration der $H_3PO_4$ und/oder Polyphosphorsäure, berechnet als $P_2O_5$ bezogen auf die Gesamtmenge an $H_3PO_4$ und/oder Polyphosphorsäure und/oder Wasser, kleiner 72,0 %, bevorzugt kleiner 71,7 %, besonders bevorzugt kleiner %, ganz besonders bevorzugt kleiner 71,0 %, insbesondere kleiner 70,5 %, wählt, und

b) Wasser aus der Lösung oder Dispersion aus Schritt a) entfernt und die Konzentration der $H_3PO_4$ und/oder

Polyphosphorsäure, berechnet als $P_2O_5$ bezogen auf die Gesamtmenge an $H_3PO_4$ und/oder Polyphosphorsäure und/oder Wasser, vorzugsweise um mindestens 0,1 %, bevorzugt um mindestens 0,5 %, besonders bevorzugt um mindestens 1,0 %, insbesondere um mindestens 1,5 %, erhöht.

Die Lösung oder Dispersion aus Schritt a) ist in der Regel auf an sich bekannte Weise, beispielsweise durch Mischen der Komponenten, erhältlich. Weitere Herstellungsmethoden werden in der WO 02/08829 beschrieben.

Besonders bevorzugt wird die Lösung oder Dispersion aus Schritt a) durch Hydrolyse einer Lösung oder Dispersion erhalten, die mindestens ein Polyazol und Polyphosphorsäure umfasst. Die Herstellung einer solchen Lösung oder Dispersion kann durch Polymerisation der zuvor genannten Monomere in Polyphosphorsäure erfolgen.

Die Lösung oder Dispersion aus Schritt a) enthält, bezogen auf ihr Gesamtgewicht, vorzugsweise mindestens 1,8 Gew.-%, besonders bevorzugt mindestens 2,0 Gew.-%, insbesondere im Bereich von 2,2 bis 2,5 Gew.-%, mindestens eines Polyazols mit einer intrinsischen Viskosität, gemessen in mindestens 96 Gew.-%-iger Schwefelsäure, im Bereich von 3,0 bis 8 g/dL. Die Gesamtmenge an ortho-Phosphorsäure, Wasser und ggf. Polyphosphorsäure ist vorzugsweise bis zu 98,2 Gew.-% und liegt bevorzugt im Bereich von 90,0 bis zu 98,0 Gew.-%, insbesondere im Bereich von 95,0 bis 97,8 Gew.-%.

Die Entfernung des Wassers in Schritt b) erfolgt vorzugsweise durch Verdampfen, insbesondere durch Erwärmen der Zusammensetzung aus Schritt a) auf über 100°C und/oder durch Anlegen von Unterdruck. Besonders bevorzugt wird eine Vorgehensweise, bei welcher man die Zusammensetzung aus Schritt a) auf eine Temperatur im Bereich von größer 120°C bis 240°C, insbesondere im Bereich von 120°C bis 160°C, zweckmäßigerweise für eine Zeit im Bereich von mindestens 1 h bis höchstens 48 h, insbesondere im Bereich von mindestens 2 h bis höchstens 24 h, erwärmt.

Gemäß einer weiteren bevorzugten Variante der vorliegenden Erfindung erfolgt die Herstellung der Zusammensetzung derart, dass man

I) eine Lösung oder Dispersion eines Polyazols mit einer intrinsischen Viskosität, gemessen in mindestens 96 Gew.-%-iger Schwefelsäure, im Bereich von 3,0 bis 8,0 g/dL, in Polyphosphorsäure bei einer Temperatur größer 160°C, bevorzugt größer 180°C, insbesondere im Bereich von 180°C bis 240°C, vorlegt, wobei die Konzentration an $H_3PO_4$ und/oder Polyphosphorsäure, berechnet als $P_2O_5$ (acidimetrisch) bezogen auf die Gesamtmenge an $H_3PO_4$ und/oder Polyphosphorsäure und/oder Wasser, größer 72,4 %, bevorzugt größer 73,0 %, besonders bevorzugt größer 74,0 %, ganz besonders bevorzugt größer 75,0 -%, insbesondere größer 75,45 %, ist,
II) Wasser, ortho-Phosphorsäure und/oder Polyphosphorsäure zu der Lösung oder Dispersion zugibt, bis das Gemisch eine Gesamtmenge an $H_3PO_4$ und/oder Polyphosphorsäure, berechnet als $P_2O_5$ (acidimetrisch) bezogen auf die Gesamtmenge an $H_3PO_4$ und/oder Polyphosphorsäure und/oder Wasser, im Bereich von 70,5 % bis 75,45 %, bevorzugt im Bereich von 71,0 % bis 75,0 -%, besonders bevorzugt im Bereich von 71,5 % bis 74,0 %, ganz besonders bevorzugt im Bereich von 71,7 % bis 73,0 %, insbesondere im Bereich von 72,0 % bis 72,4 %, aufweist,
III) das Gemisch homogenisiert, wobei man die Gesamtmenge an $H_3PO_4$ und/oder Polyphosphorsäure in dem in Schritt ii) genannten Bereich hält.

Die Lösung oder Dispersion aus Schritt I) ist in der Regel auf an sich bekannte Weise, beispielsweise durch Mischen der Komponenten, erhältlich. Weitere Herstellungsmethoden werden in der WO 02/08829 beschrieben.

Besonders bevorzugt wird die Lösung oder Dispersion aus Schritt I) durch Polymerisation der zuvor genannten Monomere in Polyphosphorsäure erhalten.

Die Lösung oder Dispersion aus Schritt I) enthält, bezogen auf ihr Gesamtgewicht,

- vorzugsweise mindestens 1,8 Gew.-%, besonders bevorzugt mindestens 2,0 Gew.-%, insbesondere im Bereich von 2,2 bis 2,5 Gew.-%, mindestens eines Polyazols mit einer intrinsischen Viskosität, gemessen in mindestens 96 Gew.-%-iger Schwefelsäure, im Bereich von 3,0 bis 8 g/dL, und
- vorzugsweise bis zu 98,2 Gew.-%, bevorzugt im Bereich von 90,0 bis zu 98,0 Gew.-%, insbesondere im Bereich von 95,0 bis 97,8 Gew.-%, Polyphosphorsäure und ggf. ortho-Phosphorsäure und/oder Wasser.

Als Polyphosphorsäure kann handelsübliche Polyphosphorsäure eingesetzt werden, wie sie beispielsweise von Riedel-de Haen erhältlich ist. Die Polyphosphorsäure $H_{n+2}P_nO_{3n+1}$ (n>1) besitzt vorzugsweise einen Gehalt berechnet als $P_2O_5$ (acidimetrisch) von mindestens 83%.

Die herkömmliche Hydrolyse solcher Zusammensetzungen führt zu Zusammensetzungen mit verschlechtertem Fliessverhalten, die unter Standardbedingungen nicht mehr verarbeitbar sind. Daher werden bevorzugt die Schritte II) und III) durchgeführt.

Die Zugabe in Schritt II) kann dabei sowohl portionsweise als auch kontinuierlich erfolgen.

Nach der Zugabe enthält das Gemisch, bezogen auf ihr Gesamtgewicht,

- vorzugsweise mindestens 1,6 Gew.-%, besonders bevorzugt mindestens 1,8 Gew.-%, insbesondere im Bereich von 2,0 bis 2,3 Gew.-%, mindestens eines Polyazols mit einer intrinsischen Viskosität, gemessen in mindestens 96 Gew.-%-iger Schwefelsäure, im Bereich von 3,0 bis 8 g/dL, und
- vorzugsweise bis zu 98,4 Gew.-%, bevorzugt im Bereich von 90,0 bis zu 98,2 Gew.-%, insbesondere im Bereich von 95,0 bis 98,0 Gew.-%, Polyphosphorsäure und ggf. ortho-Phosphorsäure und/oder Wasser.

Infolge der Zugabe in Schritt II) bildet sich zunächst ein inhomogenes Gemisch. Als inhomogen wird hier eine Änderung der optischen oder physikalischen Eigenschaften bezeichnet die, die Gleichheit einer Eigenschaft über die gesamte Ausdehnung des Systems, bzw. die Gleichartigkeit der Erscheinungen der Lösung ändert. Typischerweise äußert sich die Änderung der Homogenität der Lösung durch Grenzflächenbildung (Abscheidung von Flüssigkeit von der viskosen Masse), Änderung der Farbe (typischerweise von grün ins gelbliche), oder aber die Abscheidung von deutlich sichtbaren Partikeln oder Feststoffteilchen aus der glatten Lösung. Als homogen wird die Lösung betrachtet, wenn diese der Lösung oder Dispersion des Polyazols in Polyphosphorsäure optisch gleicht; Unterscheidungen gibt es ggf. nur in der Viskosität.

Die Homogenisierung in Schritt III) erfolgt vorzugsweise in einem geschlossenen System, beispielsweise in einem Autoklaven. Auch ist es besonders günstig, ggf. verdampfendes Wasser zu kondensieren und dem Gemisch wieder zuzuführen, bevorzugt indem man das verdampfende Wasser in mindestens einem Rückflusskühler kondensiert, der vorzugsweise direkt mit dem Reaktionsgefäß verbunden ist.

Überraschenderweise homogenisiert sich die Lösung nach einiger Zeit, bevorzugt in weniger als 4h, insbesondere nach spätestens 2h. Die Lösungsviskosität des Gemischs sinkt ab und es bildet sich eine erfindungsgemäße einsetzbare Zusammensetzung.

Gemäß einer weiteren besonders bevorzugten Ausführungsform der vorliegenden Erfindung gibt man in Schritt ii) ortho-Phosphorsäure zu.

Für die Zwecke der vorliegenden Erfindung ist es weiterhin besonders zweckmäßig die Art und die Menge der Monomere für die Polykondensation so zu wählen, dass der resultierende Polymerisationsgrad nach oben begrenzt ist.

Der theoretische Polymerisationsgrad des Polykondensats $(X_R)_n$, berechnet bei 100% Umsatz, liegt vorzugsweise bei maximal 10.000, bevorzugt bei maximal 5.000, insbesondere bei maximal 2.000.

Dieser wird vorzugsweise folgendermaßen ermittelt:

$$(X_R)_n = \frac{1 + r_0}{1 + r_0 - 2r_0 p_A}$$

wobei

$$r_0 = \frac{n_A^0}{n_B^0}$$

$$p_A = \frac{n_A^0 - n_A}{n_A^0}$$

$n_A^0$: anfängliche Stoffmenge des ersten Monomers

$n_A$: nach einer Zeit t noch vorhandene Stoffmenge des ersten Monomers $n_B^0$: anfängliche Stoffmenge des zweiten Monomers

Für stöchiometrische Polykondensationen ist ro = 1.

Bei nicht-stöchiometrischen Polykondensationen bezeichnet A die im Unterschuss vorliegenden Monomere.

Bei Zusatz von monofunktionellen Verbindungen Z gilt die Beziehung:

$$(X_R)_n = \frac{1 + \left( n_Z^0 / n_M^0 \right)}{1 - p + \left( n_Z^0 / n_M^0 \right)}$$

wobei

$$p = \frac{n_M^0 - n_M}{n_M^0}$$

$n_M^0$: anfängliche Stoffmenge der Monomermoleküle

$n_M$: nach einer Zeit t noch vorhandene Stoffmenge der Monomermoleküle $n_Z^0$: anfängliche Stoffmenge der monofunktionellen Verbindungen

Bezüglich weitere Details zu diesen Berechnungen wird auf die gängige Fachliteratur, insbesondere Hans-Georg Elias "Makromoleküle", Band 1 "Grundlagen: Struktur - Synthese - Eigenschaften", 5. Auflage (1990), Basel, Heidelberg, New York; Hüthig und Wepf, Kapitel 7.2.3 "Umsatz und Polymerisationsgrad", verwiesen.

Besonders zweckmäßig ist es in Schritt i) die Tetra-Amino-Verbindung und die Carbonsäureverbindung in einem nicht äquimolaren Verhältnis vorzulegen. Besonders günstige Molverhältnisse von Tetra-Amino-Verbindung zu Carbonsäureverbindung liegen im Bereich von 1,001:1 bis 1,1:1, bevorzugt im Bereich von 1,001:1 bis 1,01:1, insbesondere im Bereich von 1,001:1 bis 1,005:1. Ebenfalls bevorzugt werden Mengenverhältnisse von Tetra-Amino-Verbindung zu Carbonsäureverbindung im Bereich von 0,5:1 bis 0,999:1, bevorzugt im Bereich von 0,950:1 bis 0,999:1, insbesondere im Bereich von 0,995:1 bis 0,999:1.

Darüber hinaus ist es besonders vorteilhaft, wenn man in Schritt i) Monocarbonsäuren, Monocarbonsäureester und/oder Monoaminoverbindungen zugibt. Besonders geeignete Monocarbonsäuren umfassen Ameisensäure, Essigsäure, Propansäure, Buttersäure, Pentansäure, Hexansäure und Benzoesäure. Besonders geeignete Monocarbonsäureester umfassen Methyl-, Ethyl-, Propyl-, n-Butyl- und tert.-Butylester der genannten Verbindungen. Besonders geeignete Monoaminoverbindungen umfassen primäre Amine, insbesondere Methyl-, Ethyl, Propyl-, iso-Propyl-, n-Butyl-, tert.-Butyl-, n-Pentyl-, n-Hexylamin sowie Anilin.

Das Molverhältnis von Monocarbonsäuren, Monocarbonsäureester und/oder Monoaminoverbindungen zur Summe der Tetra-Amino-Verbindungen und der Carbonsäureverbindungen mit zwei Carboxylgruppen, liegt vorzugsweise im Bereich von 0,001:1 bis 0,5:1, bevorzugt im Bereich von 0,001:1 bis 0,05:1, insbesondere im Bereich von 0,001:1 bis 0,005:1.

Das Molverhältnis von Monocarbonsäuren, Monocarbonsäureester und/oder Monoaminoverbindungen zur Summe der Aminogruppen und der Carboxylgruppen, liegt vorzugsweise im Bereich von 0,001:1 bis 0,5:1, bevorzugt im Bereich von 0,001:1 bis 0,05:1, insbesondere im Bereich von 0,001:1 bis 0,005:1.

Zweckmäßigerweise ist das erfindungsgemäße Verfahren Teil eines Verfahrens zur Herstellung einer protonenleitenden Polymermembran auf Basis von Polyazolen, welches die Schritte umfasst

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion

B) Aufbringen einer Schicht unter Verwendung der Mischung gemäß Schritt A) auf einem Träger,

C) Erwärmen des flächigen Gebildes/Schicht erhältlich gemäß Schritt B) unter Inertgas auf Temperaturen von bis zu 350°C, vorzugsweise bis zu 280°C,

D) Behandlung der in Schritt C) gebildeten Membran bis diese selbsttragend ist.

Grundsätzlich wird ein solches Verfahren bereits in der WO 02/088219 allgemein beschrieben.

Die in diesem Zusammenhang einsetzbaren Monomere wurden bereits beschrieben.

Die Schichtbildung gemäß Schritt B) erfolgt vorzugsweise mittels an sich bekannter Maßnahmen (Gießen, Sprühen, Rakeln), die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden. Die gemäß Schritt B) erzeugte Schicht hat vorzugsweise eine Dicke zwischen 20 und 4000 μm, vorzugsweise zwischen 30 und 3500 μm, insbesondere zwischen 50 und 3000 μm.

Die Behandlung der Membran in Schritt D) erfolgt vorzugsweise bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 μm, vorzugsweise zwischen 20 und 2000 μm, insbesondere zwischen 20 und 1500 μm, die selbsttragend ist.

Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 50, insbesondere zwischen 12 und 40, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluss an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muss.

Zur weiteren Verbesserung der anwendungstechnischen Eigenschaften können dem resultierenden Polymer oder der Membran zusätzlich noch Füllstoffe, insbesondere protonenleitende Füllstoffe, sowie zusätzliche Säuren zugesetzt werden.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |

| | |
|---|---|
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMO_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Phosphide wie | ZrP, TiP, HfP |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite, andere Kondensationsprodukte der Orthokieselsäure $Si(OH)_4$ sowie deren Salze und Ester, Polysiloxane der allg. Formel $H_3Si-(O-SiH_2-)_n-O-SiH_3$, speziell auch andere Tonmineralien, wie Montmorrillonite, Bertonite, Kaolinite, Pyrophillite, Talkum, Chlorite, Muscovite, Glimmer, Smectite, Halosite, Vermiculite und Hydrotalcite. |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, Vliesse oder Gewebe, bevorzugt auf Basis von Polyazolen und/oder Polyaryletherketonen oder Polyarylethersulfonen, auch teilvernetzt. Die Füllstoffe können auch teilweise oder vollständig, bezogen auf den Aromatenanteil, durch geladene Gruppen modifiziert sein, wobei in diesen Zusammenhang Sulfonsäuregruppen, Phosphonsäuregruppen, Phosphatgruppen und/oder andere anionische oder kationische geladene Gruppen besonders geeignet sind. |

Diese Additive können in der Zusammensetzung in üblichen Mengen enthalten sein, wobei jedoch die positiven Eigenschaften, wie hohe Leitfähigkeit, hohe Lebensdauer und hohe mechanische Stabilität durch Zugabe von zu großen Mengen an Additiven nicht allzu stark beeinträchtigt werden sollten. Im Allgemeinen umfasst das resultierende Polymer oder die resultierende Membran höchstens 80 Gew.-%, vorzugsweise höchstens 50 Gew.-% und besonders bevorzugt höchstens 20 Gew.-% Additive.

Als weiteres kann das resultierende Polymer oder die resultierende Membran auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Anwendungsgebiete der durch das erfindungsgemäße Verfahren erhältlichen Polymere und Membranen umfassen insbesondere ihre Verwendung als Polymer-Elektrolyt-Membran in Brennstoffzellen. Für weitere Details wird auf die Druckschriften DE 102 13 540 A1, DE 102 46 559 A1 und DE 102 46 461 A1 verwiesen, deren Offenbarung hierin durch Bezugnahme aufgenommen wird.

Nachfolgend wird die Erfindung durch Beispiele weiter veranschaulicht, ohne dass hierdurch eine Beschränkung des Erfindungsgedankens erfolgen soll.

***Beispiel 1: Standardreaktion von 3,3',4,4'-Tetraaminobiphenyl (TAB) und Terephthalsäure (TPA) in Polyphosphorsäure***

Es werden 3,3', 4,4'-Tetraaminobiphenyl (TAB) und Terephthalsäure (TPA) in stöchiometrischen Verhältnis gemischt und eine 2Gew.-%ige Mischung der beiden Monomere wird in Polyphosphorsäure (PPA, 116%) vorgelegt. Dazu werden in einem 1L-HWS Glasreaktor 22,53g TAB und 17,47g TPA in 1960g PPA vorgelegt. Das allgemeine Verfahren hierzu ist in der WO 02/088219 beschrieben. Die Mischung wird bei 240°C zur Reaktion gebracht, wobei eine Lösung von Poly(2,2'-(m-phenylen)-5,5'-bibenzimidazol) (=PBI) entsteht. Ein stufenweises Aufheizen hat sich als besonders vorteilhaft erwiesen.

Der Reaktionsverlauf wird anhand der Änderung des Krafteintrages des Rührwerks verfolgt und das Drehmoment digital erfasst. Die Änderung des Drehmomentes während der Reaktion ist in der Tabelle 1 auszugsweise für verschiedene Zeiten angegeben. Die Reaktion soll definitionsgemäß bei einem Zieldrehmoment von 100 N/cm abgebrochen werden. Der Wert wurde aus Erfahrungswerten abgeschätzt und für alle Beispiele gleichmäßig festgelegt. (gemessen durch Krafteintrag Heidolph Rührmotor RZR 2102 Control).

In der Tabelle 1 ist mit dem Forschreiten der Reaktion ein rascher, in Näherung exponentieller Anstieg des Drehmomentes ablesbar. Das Zieldrehmoment wird in guter Näherung nach ca. 100 min erreicht. Das erzielte Molekulargewicht des PBI-Polymers liegt, ausgedrückt anhand der inhärentenen Viskosität (kurz: IV-Wert), bei 6,4 dL/g (gemessen wird der IV Wert in 96 - 98 %iger Schwefelsäure bei einer Konzentration von c = 1 g/L in einem Standard Ubbelohde-Kappilar-Viskosimeter). Der rasche Anstieg des Drehmomentes spiegelt den schnellen Verlauf der Polykondensationsreaktion wieder und zeigt, dass die Reaktion technisch im großen Maßstab nicht exakt kontrollierbar ist. Bei hohen Lösungsviskositäten (hier angenommen zu > 100 N/cm) ist die Lösung erfahrungsgemäß nicht mehr zu selbstragenden Membranen verarbeitbar. Eine solche, hochviskose Lösung ist einem großtechnischen Verfahren aus einem Reaktor nicht mehr zu entnehmen. Dies kann zu Ausfallzeiten der Reaktoren und erheblichen Kosten für Reinigung führen, die in einem solchen Prozess zu vermeiden sind. Nach dem Stand der Technik wird zur Kontrolle der Reaktion die Temperatur kurz vor Beendigung der Reaktion unter die Reaktionstemperatur (ca. 160°C) abgesenkt, um durch Abkühlung ein Fortschreiten der Reaktion während der Verarbeitung zu verhindern. Durch die hohe Wärmekapazität der Phosphorsäure ist dies jedoch ein nur bedingt geeigneter Weg und die Reaktion kann - je nach Abkühlrate - unter Umständen weiter Fortschreiten und führt zu Schwankungen in den physikalischen Eigenschaften der Polymerlösung.

Tabelle 1: Änderung des Drehmoment nach Erhöhung der Reaktionstemperatur auf 240°C bis zum Abbruch der Reaktion

| **t (min)** | **Lösungsviskosität (Krafteintrags des Rührers) (N/cm)** |
|---|---|
| 0,0 | 1,6 |
| 10,0 | 1,1 |
| 20,0 | 2,2 |
| 30,0 | 5,1 |
| 40,0 | 10,9 |
| 50,0 | 20,1 |
| 60,0 | 33,8 |
| 70,0 | 51,1 |
| 80,0 | 64,8 |
| 90,0 | 76,4 |
| 100,0 | 88,3 |
| 108,0 | 96,7 |

Die vorliegende Erfindung zeigt Wege auf, eine solche Polykondesationsreaktion entweder (a) technisch oder chemisch kontrolliert ablaufen zu lassen oder (b) zu einem definierten Zeitpunkt kontrolliert abzubrechen (s. folgende Beispiele).

***Beispiel 2 (Stopper Reaktion)***

***Reaktionsabbruch durch Verdünnung einer hochkonzentrierten PBI-PPA Lösung mit VE-Wasser***

Durchführung wie in Beispiel 1, jedoch wird dieses Mal eine 2,3 Gew.-%ige Lösung eines stöchiometrischen Gemisches von TAB und TPA in PPA vorgelegt. Zur Reaktionskontrolle wird im vorliegenden Beispiel bei Erreichen des Zieldrehmomentes von 100 N/cm (vgl. Beispiel 1) eine definierte Menge vollentionisiertes Wasser zur noch heißen Lösung dosiert. Der Verlauf der Lösungsviskosität mit der Zeit, ausgedrückt in relativen Einheiten (N/cm), ist in der Tabelle 4 zusammengefasst. Die inhärente Viskosität des Polymers beträgt zum Zeitpunkt der Wasserzugabe IV = 6,1 dL/g.

Man erkennt deutlich den Abfall der Lösungsviskosität nach Zugabe des Wassers. Des Weiteren stellt sich nach der Zugabe von Wasser ein konstantes Drehmoment ein (Drehmoment von T = 20 N/cm bei t = 440 - 470 min), und ein schneller Anstieg wie bei der vorangegangenen Kondensationsreaktion (siehe Tabelle 1 in Beispiel 1 und Reaktionszeiten t = 180 - 240 min) ist nicht mehr zu erkennen.

Ohne eine Verdünnung wäre die Lösung nach kurzer Zeit zu viskos für eine Verarbeitung zu einem selbsttragenden Film und müsste entsorgt werden. Außerdem können auf diesem Wege Lösungen, die in einem Reaktor eine hohe Viskosität erreicht haben, wieder verarbeitbar gemacht werden. Dies spart aufwendige Reinigungsprozeduren für Anlage und Reaktoren, Ausfallzeiten werden vermieden und Beschädigungen von Reaktoren durch mechanische Reinigung können vermieden werden.

Tabelle 2: Änderung des Drehmomentes nach Erhöhung der Reaktionstemperatur auf 240°C und nach der Zugabe von Wasser

| Zeitpunkt (min) | Lösungsviskosität (gemessen anhand des Krafteintrags des Rührers) (N/cm) |
|---|---|
| t=0 (17h40min) | 0 (Kalibrierung, Temperatur 195°C) |
| t= 60 (18h40min) | 0,5 |
| t=120 (19h40min) | 1,5 |
| Erhöhung Temperatur 240°C (Reaktion) | |
| t=180 (20h40min) | 1,5 |
| t=210 (21h10min) | 21,9 |
| t=220 (21h20min) | 51,5 |
| t=230 (21h30min) | 84,8 |
| t=240 (21h40min) | 103,5 |
| Zugabe VE-Wasser, Temperaturabsenkung auf 200°C | |
| t=250 (21h50min) | 96,0 |
| t=280 (22h20min) | 86,3 |
| t=290 (22h30min) | 61,2 |
| t=320 (23h00min) | 67,7 |
| t=380 (24h00min) | 43,7 |
| t=440 (25h00min) | 22,0 |
| T=455 (25h15min) | 23,4 |
| T=470 (25h30min) | 23,7 |

**Beispiel 3: Prozess-/Reaktionskontrolle durch nicht stöchiometrische Verfahrensweise**

Es werden zu Beginn der Reaktion 3,3', 4,4'-Tetraaminobiphenyl (TAB) und Terephthalsäure (TPA) gemischt und in einem stöchiometrischen Verhältnis von 0,99:1 vorgelegt. Dies bedeutet, dass die Tetraaminokomponente (TAB) in einem 1%igen Unterschuss vorliegt. Konzentration an Monomeren in Polyphosphorsäure beträgt 2 Gew.-%.

Die Mischung wird analog zu den Beispielen 1 und 2 bei 240°C zur Reaktion gebracht, wobei zunächst eine Lösung von Poly(2,2'-(m-phenylen)-5,5'-bibenzimidazol) (=PBI) in PPA mit niederen Molmassen entsteht. Dies ist nach dem Stand der Technik chemisch erklärbar durch die sog. Carothers-Gleichung. (Berechnung der Polymerisationszahl für Polykondensationsreaktionen in Abhängigkeit vom stöchiometrischen Verhältnis der Monomere). Im Speziellen zeigt diese Gleichung auch, dass bei Polykondensationsreaktionen hohe Molgewichte erst bei Umsätzen von mehr als 99,9 Gew.-% der Monomere entstehen können.

Das stöchiometrische Verhältnis von TAB zu TPA in diesem Beispiel führt demnach im ersten Schritt der Reaktion nicht zu hohen Polymerisationsgraden und einer konstanten, niedrigen Lösungsviskosität.

In Tabelle 3 ist erkennbar, dass entsprechend dieser Annahme die Molgewichte des PBI Polymers - gemessen anhand der Änderung des Drehmoments des Rührwerks - von t = 0 bis t = 600 min nicht wesentlich ansteigen. In Beispiel

1 hat im Vergleich bei stöchiometrischer Verfahrensweise die Reaktion bereits nach t = 108 min (s. Tabelle 1) ihr Zieldrehmoment erreicht.

Nach t = 1700 min bei 240°C werden 0,01 mol TAB zu der Reaktionslösung zugegeben. Nach Zugabe des TAB liegen die Reaktanden in stöchiometrischem Verhältnis vor und es kommt zu einem Anstieg der Lösungsviskosität.

In Tabelle 3 wird die zeitliche Änderung des Drehmomentes nach Erhöhung der Reaktionstemperatur auf 240°C und nach dem Ausgleich der Stöchiometrie durch Zugabe von TAB tabellarisch dargestellt.

Nach Zugabe des TAB erfolgt ein Anstieg der Lösungsviskosität durch eine Fortsetzung der Polykondesationsreaktion. Dieser erfolgt hier jedoch erheblich langsamer, als in Beispiel 1 für eine Standard Reaktion beschrieben, sodass die Reaktion verfahrenstechnisch gut kontrollierbar bleibt.

Des Weiteren ist in Tabelle 3 zu erkennen, dass die Lösungsviskosität beim angestrebten Zieldrehmoment gegen einen endlichen Wert läuft, der dem Zieldrehmoment von 100 N/cm entspricht (s. Tabelle 3, t = 3150 - 3900 min). Die inhärente Viskosität des Polymers beträgt zum Ende der Reaktion IV = 6,07 dL/g.

Der Vorteil dieser Reaktionsführung liegt darin, dass die Lösung technisch sehr viel längere Verweilzeiten im Kessel hat als eine Standardreaktion nach Beispiel 1 und weiter gut verarbeitbar bleibt.

Des Weiteren ist es auch möglich, die Reaktion nach der ersten Reaktionsphase mit nicht ausgeglichener Stöchiometrie abzubrechen und abzukühlen. So gelagert kann die Lösung zu einem gewünschten, späteren Zeitpunkt wieder auf Reaktionstemperatur erwärmt und durch Ausgleich der Stöchiometrie zur Reaktion gebracht werden.

Tabelle 3: Änderung des Drehmoments nach Erhöhung der Reaktionstemperatur auf 240°C und nach dem Ausgleich der Stöchiometrie nach Beispiel 3

| Reaktionszeit (min) | Lösungsviskosität (gemessen anhand des Krafteintrags des Rührers) (N/cm) |
|---|---|
| 0 | -2,0 |
| 600 | 0,6 |
| 1200 | 2,6 |
| 1620 | 3,7<br>Ausgleich der Stöchiometrie durch Zugabe von TAB |
| 1740 | 21,5 |
| 1800 | 35,8 |
| 1920 | 46,1 |
| 2160 | 58,5 |
| 2400 | 66,7 |
| 2640 | 73,9 |
| 3150 | 84,6 |
| 3630 | 91,8 |
| 3900 | 98,8 |

### *Beispiel 4: Prozess-/Reaktionskontrolle durch Verwendung alternativer Polyphosphorsäuren (PPA)*

Im Beispiel 1 ist eine Standard Reaktion beschrieben, bei der die Monomere 3,3', 4,4'-Tetraaminobiphenyl (TAB) und Terephthalsäure (TPA) in stöchiometrischen Verhältnis gemischt und eine 2Gew.-%ige Lösung an Monomeren in 116%iger Polyphosphorsäure zur Reaktion gebracht werden. Es wurde gefunden, dass die Reaktionszeiten überraschenderweise stark abhängig von kleinen Änderungen der Konzentration und Zusammensetzung der PPA sind, so dass alternative Polyphosphorsäuren anderer Konzentrationen eine Möglichkeit zu Prozesskontrolle bieten.

Tabelle 4 zeigt einen Vergleich der Änderungen der Lösungsviskositäten während der Reaktion bei 240°C für die Umsetzung von stöchiometrischen Mengen an TAB und TPA in (a) 116% iger und (b) 118 %-wt PPA des gleichen Herstellers. Es wurden jeweils - analog zu Beispiel 1 - 22,53g TAB und 17,47g TPA in 1960g PPA der jeweiligen Konzentration vorgelegt und anschließend unter stufenweisem Aufheizen bei 240°C zur Reaktion gebracht. Der Gesamtfeststoffgehalt beider Lösungen beträgt damit zu Beginn 2Gew.-%. Der Reaktionsverlauf wird anhand der Änderung des Krafteintrages des Rührwerks bestimmt und das Drehmoment erfasst. Die Änderung des Drehmomentes während der Reaktion ist in der Tabelle 4 angegeben und die Reaktionen sollten bei einem Zieldrehmoment von 100 N/cm

abgebrochen werden (gemessen durch Krafteintrag Heidolph Rührmotor RZR 2102 Control).

Tabelle 4: Vergleich der Änderungen des Drehmoment nach Erhöhung der Reaktionstemperatur auf 240°C bis zum Abbruch der Reaktion für eine (a) Standard Reaktion (vgl. Beispiel 1) in 116%iger PPA (linke Spalte) und (b) einer Reaktion in 118%iger PPA (rechte Spalte) für stöchiometrische Mengen an TAB und TPA

| | **Standard Reaktion (116% PPA)** | **Reaktion in 118% PPA** |
|---|---|---|
| **t (min)** | **Lösungsviskosität (N/cm)** | **Lösungsviskosität (N/cm)** |
| 0,0 | 1,6 | -0,1 |
| 10,0 | 1,1 | -0,5 |
| 20,0 | 2,2 | 0,1 |
| 30,0 | 5,1 | 1,1 |
| 40,0 | 10,9 | 2,9 |
| 50,0 | 20,1 | 6,0 |
| 60,0 | 33,8 | 11,0 |
| 70,0 | 51,1 | 17,1 |
| 80,0 | 64,8 | 24,6 |
| 90,0 | 76,4 | 30,8 |
| 100,0 | 88,3 | 38,6 |
| 108,0 | 96,7 EOR | 43,1 |
| 120,0 | - | 49,6 |
| 180,0 | - | 75,6 |
| 210,0 | - | 80,0 |
| 240,0 | - | 82,3 |
| 270,0 | - | 83,7 |
| 330,0 | - | 85,5 |
| 390,0 | - | 87,0 |
| 450,0 | - | 89,7 |
| 570,0 | - | 89,3 |
| 690,0 | - | 92,2 |
| 810,0 | - | 94,1 |
| 930,0 | - | 97,8 |
| 990,0 | - | 99,9 |
| 1014,0 | - | 99,8 |
| 1014,1 | - | 100 EOR |

Während eine Standard Reaktion (Tabelle linke Spalte) ihr Zieldrehmoment (100N/cm) bereits nach 108 Minuten in einem exponentiell ansteigenden Reaktionsverlauf bei 240°C Reaktionstemperatur erreicht, nähert sich die Reaktion in 118%iger PPA (Tabelle rechte Spalte) in einem exponentiell abfallendem Verlauf langsam an 100 N/cm an.

Eine Standard Reaktion muss also abgestoppt werden, um verfahrentechnisch zu einer Membran verarbeitbar zu bleiben. Die Reaktion in 118%iger PPA bleibt bei ähnlichem Molekulargewicht mehrere Stunden verarbeitbar (390 < t (min) < 1014) und bietet den Vorteil, dass kein Eingriff in den Reaktionsverlauf erforderlich ist.

**Beispiel 5: Stopper - Abbruch eine Polykondensationsreaktion durch Zugabe einer verdünnten PBI Lösung (Absenkung PPA Konzentration)**

Ziel des Verfahrens ist ein Abstoppen der Reaktion durch Absenkung der Konzentration der vorgelegten Polyphosphorsäure, jedoch im Unterschied zu Beispiel 2, wo mit Wasser verdünnt wird, durch Zugabe einer verdünnten PBI-PPA Lösung. Grundlage für dieses Verfahren ist, dass nach dem derzeitigen Stand der Technik eine Polykondensation von TAB und TPA in Polyphosphorsäure unterhalb einer Konzentration von 108Gew.-% nicht mehr durchführbar ist bzw. stark verlangsamt wird.

Grundlage für das Beispiel ist eine Standard Polykondensationsreaktion, wie in Beispiel 1 beschrieben. Hierfür werden 2Gew.-% einer stöchiometrischen Mischung von 3,3', 4,4'-Tetraaminobiphenyl (TAB) und Terephthalsäure (TPA) (Gesamtmenge Monomermischung 40 g) in Polyphosphorsäure (1960 g PPA, 116%) vorgelegt und unter stufenweisem Aufheizen zur Reaktion gebracht. Die Änderung der Lösungsviskösität erfolgt durch Messung des Krafteintrags des Rührers, ausgedrückt als Drehmoment des Rührwerks. Die Reaktion wird nach dem Aufheizen auf eine Temperatur von 240°C bis zu einem Drehmoment von 100 N/cm geführt. Anstelle einer - ebenfalls in Beispiel 1 beschriebenen - Absenkung der Temperatur zum Verlangsamen bzw. Abstoppen der Reaktion werden bei Erreichen des Zieldrehmomentes in diesem Fall 680 g einer Lösung von 2,1%-wt Poly(2,2'-(m-phenylen)-5,5'-bibenzimidazol) in 100%iger o-PA zugegeben. Lösungen dieser Art sind in der Anmeldung "polyazolhaltige Zusammensetzung" (EP Anmeldenummer 09008110.0) beschrieben. Die Änderungen der Lösungsviskosität während der Polykondensationsreaktion und nach Zugabe der oben beschriebenen, verdünnten PBI Lösung sind der Tabelle 5 zu entnehmen.

In der Tabelle 5 ist das Zieldrehmoment der Polykondensationsreaktion nach ca. 710 min erreicht. Es wird zu diesem Zeitpunkt die oben beschriebene, verdünnte PBI-PPA Lösung zugegeben. Es ist deutlich zu erkennen, dass das Drehmoment nach der Zugabe der Lösung stark abfällt (von 94,5 N/cm (710 min) auf 56,2 N/cm (840 min)), was in der Verdünnung der PPA begründet ist. Es ist des Weiteren zu erkennen, dass bis zum Ende der Datenerfassung (t Reaktion = 1520 min) das Drehmoment nicht mehr über das Zieldrehmoment (100 N/cm bei 710 min) ansteigt. Die Lösung bleibt also im Gegensatz zu einer Standard Polykondensation (vgl. Beispiel 1) gut kontrollierbar und technisch verarbeitbar. Ein schneller Anstieg wie bei der vorangegangenen Kondensationsreaktion (siehe Tabelle 1 in Beispiel 1 und Reaktionszeiten t = 180 - 240 min) ist nicht mehr zu erkennen. Die inhärente Viskosität des Polymers beträgt zum Ende der Reaktion IV = 5,06 dL/g.

Tabelle 5: Vergleich der Änderungen des Drehmoment nach Erhöhung der Reaktionstemperatur auf 240°C bis zum Abbruch der Reaktion durch Zugabe einer verdünnten PBI Lösung und Entwicklung des Drehmomentes nach Zugabe der verdünnten Lösung.

| Zeit (min) | Lösungsviskosität (gemessen anhand des Krafteintrags des Rührers) (N/cm) |
|---|---|
| 0,00 | 0,0 |
| 20,00 | 0,8 |
| 40,00 | 8,5 |
| 50,00 | 21,7 |
| 60,00 | 41,9 |
| 80,00 | 59,7 |
| 160,00 | 65,5 |
| 200,00 | 67,6 |
| 230,00 | 71,3 |
| 350,00 | 75,1 |
| 530,00 | 87,3 |
| 710,00 | 97,7 |
| 770<br>(Zugabe verdünnte PBI-Lösung) | 94,5 |
| 774,00 | 72,5 |
| 782,00 | 63,9 |

(fortgesetzt)

| Zeit (min) | Lösungsviskosität (gemessen anhand des Krafteintrags des Rührers) (N/cm) |
|---|---|
| 790,00 | 59,1 |
| 810,00 | 56,3 |
| 840,00 | 56,2 |
| 1080,00 | 67,2 |
| 1380,00 | 72,0 |
| 1520,00 | 74,3 |

## Patentansprüche

1. Verfahren zur Herstellung eines Polyazols mit einer inhärenten Viskosität größer 2,9 dL/g, wobei die inhärenten Viskosität in mindestens 96 %iger Schwefelsäure bei 25°C und bei einer Konzentration von 100 mg bei 160°C für 2h getrocknetem Polymer in 100 ml mindestens 96 %iger Schwefelsäure gemessen wird, wobei das Verfahren die Schritte umfasst

   i) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
   ii) Erwärmen der Mischung aus Schritt i) unter Inertgas auf Temperaturen bis 350°C unter Ausbildung des Polyazols,

   **dadurch gekennzeichnet, dass** man

   - in Schritt ii) eine Mischung erwärmt, die eine Konzentration von Polyphosphorsäure, berechnet als $P_2O_5$ (acidimetrisch), bezogen auf die Gesamtmenge an $H_3PO_4$, Polyphosphorsäure und Wasser in der Mischung, größer 81,85 % aufweist,
   - die Mengen der Komponenten in Schritt i) derart wählt, dass der Gewichtsanteil der Tetra-Amino-Verbindungen und der aromatischen Carbonsäuren bzw. deren Ester, die mindestens zwei Säuregruppen pro Carbonsäure-Monomer enthalten, oder der Diaminocarbonsäuren der Mischung in Schritt ii), bezogen auf das Gesamtgewicht der Mischung, kleiner 11,0 Gew.-% ist,
   - die Reaktionsmischung in Schritt ii) auf größer 220°C erwärmt.

2. Verfahren nach Anspruch 1, **dadurch gekennzeichnet, dass** man in Schritt ii) eine Mischung erwärmt, die eine Konzentration von Polyphosphorsäure, berechnet als $P_2O_5$ (acidimetrisch), bezogen auf die Gesamtmenge an $H_3PO_4$, Polyphosphorsäure und Wasser in der Mischung, kleiner 84,74 % aufweist.

3. Verfahren nach Anspruch 1 oder 2, **dadurch gekennzeichnet, dass** man in Schritt ii) die die Konzentration der Polyphosphorsäure in der Mischung, berechnet als $P_2O_5$ (acidimetrisch), bezogen auf die Gesamtmenge an $H_3PO_4$, Polyphosphorsäure und Wasser in der Mischung, verringert.

4. Verfahren nach Anspruch 3, **dadurch gekennzeichnet, dass** in Schritt ii) eine Zusammensetzung in Form einer Lösung und/oder Dispersion zugibt, die

   ◦ mindestens ein Polyazol mit einer intrinsischen Viskosität, gemessen in mindestens 96 Gew.-%-iger Schwefelsäure, im Bereich von 3,0 bis 8,0 g/dL, und
   o ortho-Phosphorsäure und/oder Polyphosphorsäure umfasst,

   wobei

   - der Gehalt an Polyazol, bezogen auf das Gesamtgewicht der Zusammensetzung, im Bereich von 0,5 Gew.-

% bis 30,0 Gew.-% liegt,

- der Gehalt an $H_3PO_4$ und/oder Polyphosphorsäure, bezogen auf das Gesamtgewicht der Zusammensetzung, im Bereich von 30,0 Gew.-% bis 99,5 Gew.-% liegt,
- die Konzentration der $H_3PO_4$ und/oder Polyphosphorsäure, berechnet als $P_2O_5$ (acidimetrisch), bezogen auf die Gesamtmenge an $H_3PO_4$ und/oder Polyphosphorsäure und/oder Wasser, im Bereich von 70,5 % bis 75,45 % liegt.

**5.** Verfahren nach Anspruch 4, **dadurch gekennzeichnet, dass** man in Schritt ii) 0,1 Gew.-% bis 50,0 Gew.-% der Zusammensetzung, bezogen auf das Gesamtgewicht der Mischung aus Schritt i), zugibt.

**6.** Verfahren nach Anspruch 3, **dadurch gekennzeichnet, dass** man in Schritt ii) ortho-Phosphorsäure zugibt.

**7.** Verfahren nach mindestens einem der vorangehenden Ansprüche, **dadurch gekennzeichnet, dass** man in Schritt i) die Tetra-Amino-Verbindung und die Carbonsäureverbindung in einem nicht äquimolaren Verhältnis vorlegt.

**8.** Verfahren nach mindestens einem der vorangehenden Ansprüche, **dadurch gekennzeichnet, dass** man in Schritt i) Monocarbonsäuren, Monocarbonsäureester und/oder Monoaminoverbindungen zugibt.

**9.** Verfahren zur Herstellung einer protonenleitenden Polymermembran auf Basis von Polyazolen ist, umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger,
C) Erwärmen des flächigen Gebildes/Schicht erhältlich gemäß Schritt B) unter Inertgas auf Temperaturen von bis zu 350°C, vorzugsweise bis zu 280°C,
D) Behandlung der in Schritt C) gebildeten Membran bis diese selbsttragend ist,

wobei das Verfahren ein Verfahren nach mindestens einem der vorangehenden Ansprüche umfasst.

**10.** Verfahren nach mindestens einem der vorangehenden Ansprüche, **dadurch gekennzeichnet, dass** man als aromatische Tetra-Amino-Verbindung 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan oder 3,3',4,4'-Tetraaminodiphenyldimethylmethan einsetzt.

**11.** Verfahren nach mindestens einem der vorangehenden Ansprüche, **dadurch gekennzeichnet, dass** man als aromatische Dicarbonsäure Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride einsetzt.

**12.** Verfahren nach mindestens einem der vorangehenden Ansprüche, **dadurch gekennzeichnet, dass** man ein Polymer auf Basis von Polyazol erhält, welches wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII) aufweist

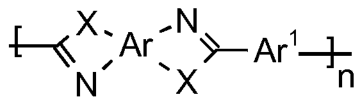

(I)

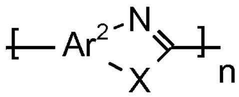

(II)

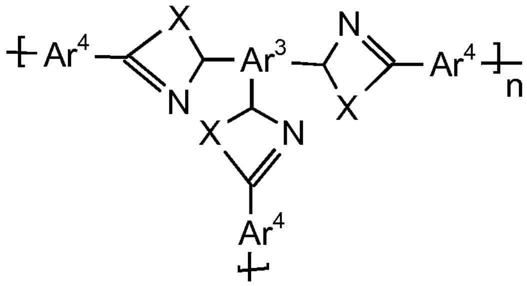

(III)

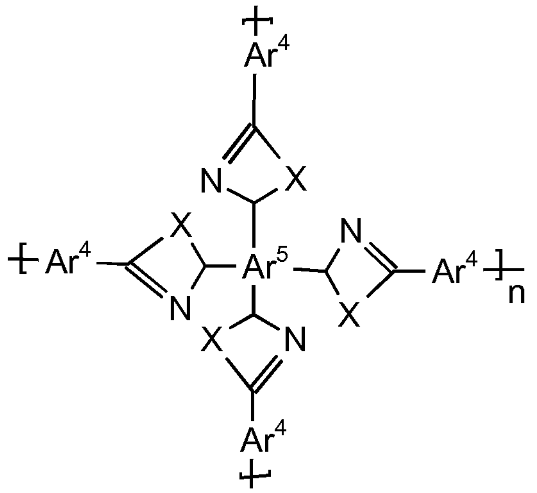

(IV)

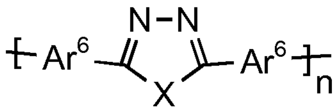

(V)

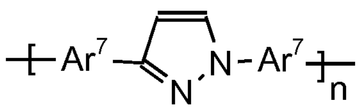

(VI)

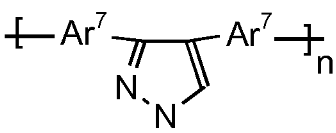

(VII)

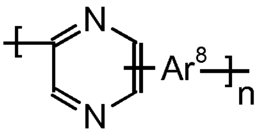

(VIII)

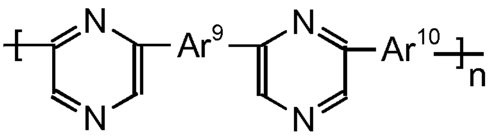

(IX)

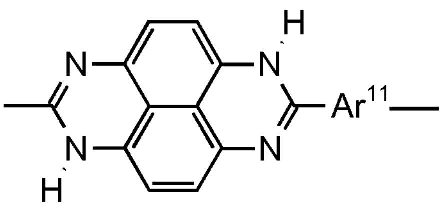

(X)

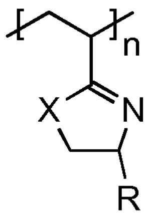

(XI)

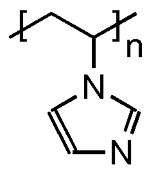

(XII)

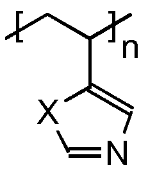

(XIII)

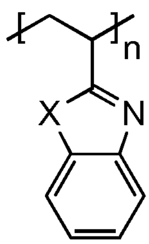

(XIV)

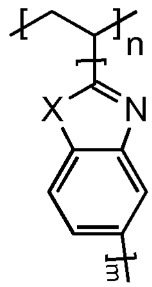

(XV)

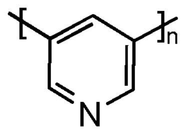

(XVI)

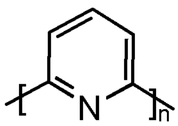

(XVII)

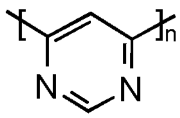

(XVIII)

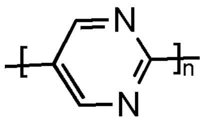

(XIX)

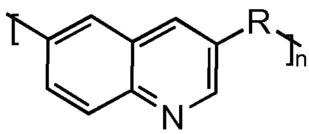

(XX)

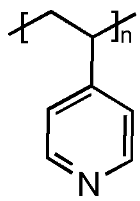

(XXI)

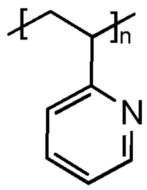

(XXII)

worin

Ar gleich oder verschieden sind und für eine vierbindige aromatische oder heteroaromatische Gruppe, die ein- oder mehrkernig sein kann,

$Ar^1$ gleich oder verschieden sind und für eine zweibindige aromatische oder heteroaromatische Gruppe, die ein- oder mehrkernig sein kann,
$Ar^2$ gleich oder verschieden sind und für eine zwei oder dreibindige aromatische oder heteroaromatische Gruppe, die ein- oder mehrkernig sein kann,
$Ar^3$ gleich oder verschieden sind und für eine dreibindige aromatische oder heteroaromatische Gruppe, die ein- oder mehrkernig sein kann,
$Ar^4$ gleich oder verschieden sind und für eine dreibindige aromatische oder heteroaromatische Gruppe, die ein- oder mehrkernig sein kann,
$Ar^5$ gleich oder verschieden sind und für eine vierbindige aromatische oder heteroaromatische Gruppe, die ein- oder mehrkernig sein kann,
$Ar^6$ gleich oder verschieden sind und für eine zweibindige aromatische oder heteroaromatische Gruppe, die ein- oder mehrkernig sein kann,
$Ar^7$ gleich oder verschieden sind und für eine zweibindige aromatische oder heteroaromatische Gruppe, die ein- oder mehrkernig sein kann,
$Ar^8$ gleich oder verschieden sind und für eine dreibindige aromatische oder heteroaromatische Gruppe, die ein- oder mehrkernig sein kann,
$Ar^9$ gleich oder verschieden sind und für eine zwei- oder drei- oder vierbindige aromatische oder heteroaromatische Gruppe, die ein- oder mehrkernig sein kann,
$Ar^{10}$ gleich oder verschieden sind und für eine zwei- oder dreibindige aromatische oder heteroaromatische Gruppe, die ein- oder mehrkernig sein kann,
$Ar^{11}$ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromatische Gruppe steht, wobei R in Formel (XX) kein Wasserstoff ist, und
n, m eine ganze Zahl größer gleich 10, bevorzugt größer gleich 100 ist.

## Claims

1. A process for the production of a polyazole with an inherent viscosity of more than 2.9 dL/g, wherein the inherent viscosity is measured in at least 96 % sulphuric acid at 25 °C and at a concentration of 100 mg of polymer dried for 2h at 160 °C in 100 ml of at least 96 % sulphuric acid, wherein the process comprises the steps of

   i) mixing one or more aromatic tetraamino compounds with one or more aromatic carboxylic acids or esters thereof which contain at least two acid groups per carboxylic acid monomer, or mixing one or more aromatic and/or heteroaromatic diaminocarboxylic acids, in polyphosphoric acid in order to form a solution and/or dispersion
   ii) heating the mixture from step i) under inert gas to temperatures up to 350 °C in order to form the polyazole,

   **characterized in that**

   - in step ii), a mixture is heated which has a concentration of polyphosphoric acid, calculated as $P_2O_5$ (by acidimetric means), with respect to the total quantity of $H_3PO_4$, polyphosphoric acid and water in the mixture, or more than 81.85 %,
   - the quantities of the components in step i) are selected in a manner such that the proportion by weight of the tetraamino compounds and of the aromatic carboxylic acids or esters thereof which comprise at least two acid groups per carboxylic acid monomer, or of the diaminocarboxylic acids of the mixture in step ii), with respect to the total weight of the mixture, is less than 11.0 % by weight,
   - the reaction mixture in step ii) is heated to more than 220 °C.

2. The process as claimed in claim 1, **characterized in that** in step ii), a mixture with a concentration of polyphosphoric acid, calculated as $P_2O_5$ (by acidimetric means), with respect to the total quantity of $H_3PO_4$, polyphosphoric acid and water in the mixture, of less than 84.74 % is heated.

3. The process as claimed in claim 1 or claim 2, **characterized in that** in step ii), the concentration of the polyphosphoric

acid in the mixture, calculated as $P_2O_5$ (by acidimetric means), with respect to the total quantity of $H_3PO_4$, polyphosphoric acid and water in the mixture, is reduced.

4. The process as claimed in claim 3, **characterized in that** in step ii), a composition in the form of a solution and/or dispersion is added which comprises

   ◦ at least one polyazole with an intrinsic viscosity, measured in at least 96 % by weight sulphuric acid, in the range from 3.0 to 8.0 g/dL, and
   ◦ orthophosphoric acid and/or polyphosphoric acid,

   wherein

   ▪ the polyazole content, with respect to the total weight of the composition, is in the range from 0.5 % by weight to 30.0 % by weight,
   ▪ the $H_3PO_4$ and/or polyphosphoric acid content, with respect to the total weight of the composition, is in the range from 30.0 % by weight to 99.5 % by weight,
   ▪ the $H_3PO_4$ and/or polyphosphoric acid concentration, calculated as $P_2O_5$ (by acidimetric means), with respect to the total quantity of $H_3PO_4$ and/or polyphosphoric acid and/or water, is in the range from 70.5 % to 75.45 %.

5. The process as claimed in claim 4, **characterized in that** in step ii), 0.1 % by weight to 50.0 % by weight of the composition is added, with respect to the total weight of the mixture from step i).

6. The process as claimed in claim 3, **characterized in that** orthophosphoric acid is added in step ii).

7. The process as claimed in at least one of the preceding claims, **characterized in that** in step i), the tetraamino compound and the carboxylic acid compound are present in a ratio which is not equimolar.

8. The process as claimed in at least one of the preceding claims, **characterized in that** in step i), monocarboxylic acids, monocarboxylic esters and/or monoamino compounds are added.

9. A process for the production of a proton-conducting polymer membrane based on polyazoles, comprising the steps of

   A) mixing one or more aromatic tetraamino compounds with one or more aromatic carboxylic acids or esters thereof which contain at least two acid groups per carboxylic acid monomer, or mixing one or more aromatic and/or heteroaromatic diaminocarboxylic acids, in polyphosphoric acid in order to form a solution and/or dispersion
   B) applying a layer to a support using the mixture in accordance with step A),
   C) heating the planar structure/sheet obtainable in accordance with step B) under inert gas to temperatures of up to 350 °C, preferably of up to 280 °C,
   D) treating the membrane formed in step C) until it is self-supporting, wherein the process comprises a process as claimed in at least one of the preceding claims.

10. The process as claimed in at least one of the preceding claims, **characterized in that** the aromatic tetraamino compound used is 3,3',4,4'-tetraaminobiphenyl, 2,3,5,6-tetraaminopyridine, 1,2,4,5-tetraaminobenzene, 3,3',4,4'-tetraaminodiphenyl sulphone, 3,3',4,4'-tetraaminodiphenyl ether, 3,3',4,4'-tetraaminobenzophenone, 3,3',4,4'-tetraaminodiphenylmethane or 3,3',4,4'-tetraaminodiphenyl dimethylmethane.

11. The process as claimed in at least one of the preceding claims, **characterized in that** the aromatic dicarboxylic acid used is isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenyl ether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid, or the $C_1$-$C_{20}$ alkyl esters or $C_5$-$C_{12}$ aryl esters thereof, or the acid anhydrides thereof or

the acid chlorides thereof.

**12.** The process as claimed in at least one of the preceding claims, **characterized in that** a polymer based on polyazole is obtained which has repeating azole units with the general formula (I) and/or (II) and/or (III) and/or (IV) and/or (V) and/or (VI) and/or (VII) and/or (VIII) and/or (IX) and/or (X) and/or (XI) and/or (XII) and/or (XIII) and/or (XIV) and/or (XV) and/or (XVI) and/or (XVI) and/or (XVII) and/or (XVIII) and/or (XIX) and/or (XX) and/or (XXI) and/or (XXII)

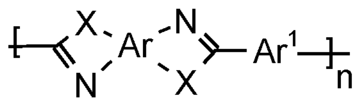
(I)

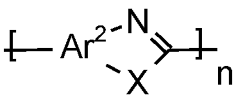
(II)

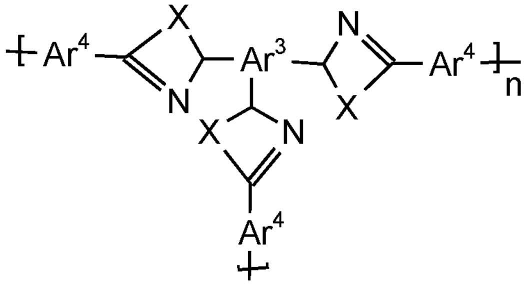
(III)

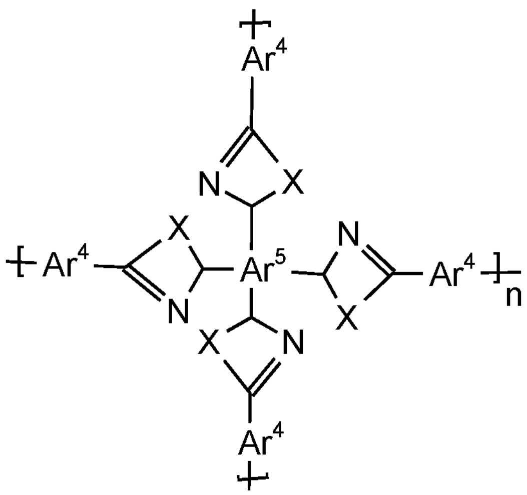
(IV)

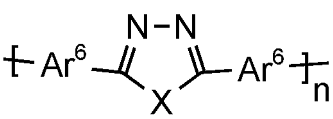
(V)

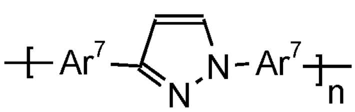
(VI)

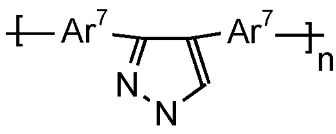

(VII)

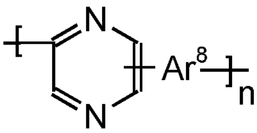

(VIII)

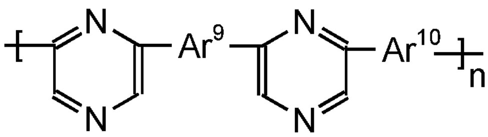

(IX)

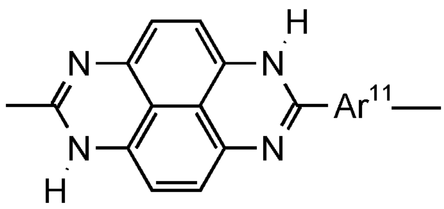

(X)

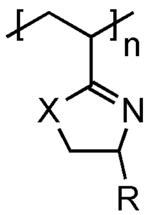

(XI)

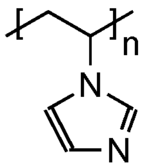

(XII)

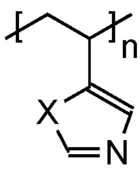

(XIII)

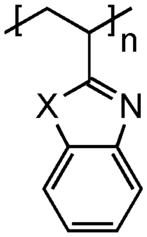

(XIV)

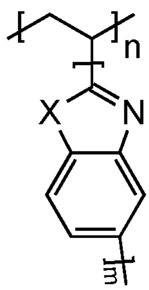

(XV)

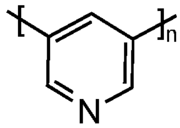

(XVI)

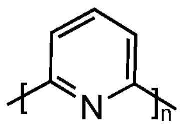

(XVII)

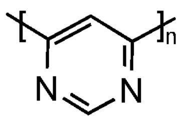

(XVIII)

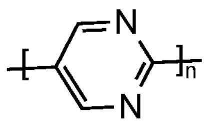

(XIX)

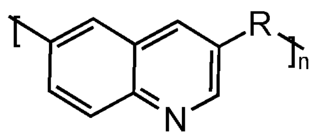

(XX)

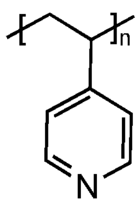

(XXI)

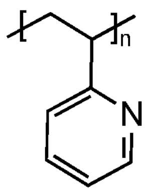

(XXII)

in which

Ar are identical or different and represent a tetravalent aromatic or heteroaromatic group which may be mono- or polycyclic,

$Ar^1$ are identical or different and represent a divalent aromatic or heteroaromatic group which may be mono- or polycyclic,
$Ar^2$ are identical or different and represent a di- or trivalent aromatic or heteroaromatic group which may be mono- or polycyclic,
$Ar^3$ are identical or different and represent a trivalent aromatic or heteroaromatic group which may be mono- or polycyclic,
$Ar^4$ are identical or different and represent a trivalent aromatic or heteroaromatic group which may be mono- or polycyclic,
$Ar^5$ are identical or different and represent a tetravalent aromatic or heteroaromatic group which may be mono- or polycyclic,
$Ar^6$ are identical or different and represent a divalent aromatic or heteroaromatic group which may be mono- or polycyclic,
$Ar^7$ are identical or different and represent a divalent aromatic or heteroaromatic group which may be mono- or polycyclic,
$Ar^8$ are identical or different and represent a trivalent aromatic or heteroaromatic group which may be mono- or polycyclic,
$Ar^9$ are identical or different and represent a di- or tri- or tetravalent aromatic or heteroaromatic group which may be mono- or polycyclic,
$Ar^{10}$ are identical or different and represent a di- or trivalent aromatic or heteroaromatic group which may be mono- or polycyclic,
$Ar^{11}$ are identical or different and represent a divalent aromatic or heteroaromatic group which may be mono- or polycyclic,
X is identical or different and represents oxygen, sulphur or an amino group which carries, as a further residue, a hydrogen atom, a group containing 1-20 carbon atoms, preferably a branched or unbranched alkyl or alkoxy group, or an aryl group,
R is identical or different and represents hydrogen, an alkyl group and an aromatic group, wherein R in formula (XX) is not hydrogen, and
n, m is an integer which is greater than or equal to 10, preferably greater than or equal to 100.

## Revendications

**1.** Procédé, destiné à produire un polyazole faisant preuve d'une viscosité inhérente supérieure à 2,9 dL/g, la viscosité inhérente étant mesurée dans de l'acide sulfurique à au moins 96 % à 25 °C et dans une concentration de 100 mg à 160 °C pour un polymère séché pendant 2 h dans 100 ml d'acide sulfurique à au moins 96 %, le procédé comprenant les étapes consistant à

i) Mélanger un ou plusieurs composés tétraamino aromatiques avec un ou plusieurs acides carboxyliques aromatiques ou leurs esters, qui contiennent au moins deux groupes acides par monomère d'acide carboxylique, ou mélanger un ou plusieurs acides diaminocarboxyliques aromatiques et/ou hétéroaromatiques, dans de l'acide polyphosphorique en créant une solution et/ou une dispersion
ii) faire chauffer le mélange obtenu à l'étape i) sous gaz inerte à des températures de jusqu'à 350 °C en créant le polyazole,

**caractérisé en ce que**

- dans l'étape ii), on fait chauffer un mélange qui comporte une concentration d'acide polyphosphorique supérieure à 81,85 %, calculée en tant que $P_2O_5$ (acidimétrique), rapportée à la quantité totale de $H_3PO_4$, d'acide polyphosphorique et d'eau dans le mélange,
- on sélectionne les quantités des composants dans l'étape i) de telle sorte que la part en poids des composés tétraamino et des acides carboxyliques aromatiques ou de leurs esters, qui contiennent au moins deux groupes acides pro monomère d'acide carboxylique, ou des acides diaminocarboxyliques du mélange dans l'étape ii) soit inférieure à 11,0 % en poids, rapportés au poids total du mélange,
- on fait chauffer le mélange réactif dans l'étape ii) à plus de 220 °C.

**2.** Procédé selon la revendication 1, **caractérisé en ce que** dans l'étape ii), on fait chauffer un mélange qui comporte une concentration d'acide polyphosphorique inférieure à 84,74 %, calculée en tant que $P_2O_5$ (acidimétrique), rapportée à la quantité totale de $H_3PO_4$, d'acide polyphosphorique et d'eau dans le mélange

3. Procédé selon la revendication 1 ou 2, **caractérisé en ce que** dans l'étape ii), on réduit la concentration de l'acide polyphosphorique dans le mélange, calculée en tant que $P_2O_5$ (acidimétrique), rapportée à la quantité totale de $H_3PO_4$, d'acide polyphosphorique et d'eau dans le mélange.

4. Procédé selon la revendication 3, **caractérisé en ce que** dans l'étape ii), on ajoute sous la forme d'une solution et/ou d'une dispersion une composition qui

◦ comprend au moins un polyazole faisant preuve d'une viscosité intrinsèque de l'ordre de 3,0 à 8,0 g/dL, mesurée dans de l'acide sulfurique à au moins 96 % en poids, et
◦ de l'acide orthophosphorique et/ou l'acide polyphosphorique,
▪ la teneur en polyazole, rapportée au poids total de la composition se situant dans l'ordre de 0,5 % en poids à 30,0 % en poids,
▪ la teneur en $H_3PO_4$ et/ou en acide polyphosphorique, rapportée au poids total de la composition si situant dans l'ordre de 30,0 % en poids à 99,5 % en poids,
▪ la concentration du $H_3PO_4$ et/ou de l'acide polyphosphorique, calculée en tant que $P_2O_5$ (acidimétrique), rapportée à la quantité totale de $H_3PO_4$ et/ou d'acide polyphosphorique et/ou d'eau se situant dans l'ordre de 70,5 % à 75,45.

5. Procédé selon la revendication 4, **caractérisé en ce que** dans l'étape ii), on ajoute de 0,1 % en poids à 50,0 % en poids de la composition, rapportée au poids total du mélange de l'étape i).

6. Procédé selon la revendication 3, **caractérisé en ce que** dans l'étape ii), on ajoute de l'acide orthophosphorique.

7. Procédé selon au moins l'une quelconque des revendications précédentes, **caractérisé en ce que** dans l'étape i), le composé tétraamino et le composé acide carboxylique se présentent dans un rapport non équimolaire.

8. Procédé selon au moins l'une quelconque des revendications précédentes, **caractérisé en ce que** dans l'étape i), on ajoute des acides monocarboxyliques, des esters monocarboxyliques et/ou des composés monoamino.

9. Procédé, destiné à produire une membrane polymère conductrice de protons sur la base de polyazoles, comprenant les étapes consistant à

A) Mélanger un ou plusieurs composés tétraamino aromatiques avec un ou plusieurs acides carboxyliques aromatiques ou leurs esters, qui contiennent au moins deux groupes acides par monomère d'acide carboxylique, ou mélanger un ou plusieurs acides diaminocarboxyliques aromatiques et/ou hétéroaromatiques dans de l'acide polyphosphorique en créant une solution et/ou dispersion,
B) appliquer une couche, en utilisant le mélange selon l'étape A) sur un support,
C) faire chauffer la structure/la couche plane susceptible d'être obtenue selon l'étape B) sous gaz inerte à des températures de jusqu'à 350 °C, de préférence de jusqu'à 280 °C,
D) traiter la membrane obtenue dans l'étape C) jusqu'à ce qu'elle soit autoportante,

le procédé comprenant un procédé selon au moins l'une quelconque des revendications précédentes.

10. Procédé selon au moins l'une quelconque des revendications précédentes, **caractérisé en ce qu'**on met en œuvre en tant que composé tétraamino aromatique un 3,3',4,4'-tétraaminobiphényl, une 2,3,5,6-tétraaminopyridine, un 1,2,4,5-tétraaminobenzène, une 3,3',4,4'-tétraaminodiphenylsulfone, un 3,3',4,4'-tétraaminodiphényléther, une 3,3',4,4'-tétraaminobenzophénone, un 3,3',4,4'-tétraaminodiphénylméthane ou 3,3',4,4'-un tétraaminodiphényldiméthylméthane.

11. Procédé selon au moins l'une quelconque des revendications précédentes, **caractérisé en ce qu'**on met en œuvre en tant qu'acide dicarboxylique aromatique un acide isophtalique, un acide téréphtalique, un acide phtalique, un acide 5-hydroxyisophtalique, un acide 4-hydroxyisophtalique, un acide 2-hydroxytéréphtalique, un acide 5-aminoisophtalique, un acide 5-N,N-diméthylaminoisophtalique, un acide 5-N,N-diéthylaminoisophtalique, un acide 2,5-dihydroxytéréphtalique, un acide 2,5-dihydroxyisophtalique, un acide 2,3-dihydroxyisophtalique, un acide 2,3-dihydroxyphtalique, un acide 2,4-dihydroxyphtalique. un acide 3,4-dihydroxyphtalique, un acide 3-fluorophtalique, un acide 5-fluoroisophtalique, un acide 2-fluoroterphtalique, un acide tétrafluorophtalique, un acide tétrafluoroisophtalique, un acide tétrafluorotéréphtalique, un acide 1,4-naphtalènedicarboxylique, un 1,5-naphtalènedicarboxylique, un acide 2,6-naphtalènedicarboxylique, un acide 2,7-naphtalènedicarboxylique, un acide diphénique, un acide 1,8-dihydroxynaphtalène-3,6-dicarboxylique, un acide diphénylether-4,4'-dicarboxylique, un acide benzophénone-4,4'-dicarboxylique, un acide diphénylsulfone-4,4'-dicarboxylique, un acide biphényle-4,4'-dicarboxylique, un acide 4-trifluorométhylphtalique, un 2,2-bis(4-carboxyphényle)héxafluoropropane, un acide 4,4'-stilbènedicarboxylique, un acide 4-carboxycynnamique, ou leur alkyle-ester en $C_1$ à $C_{20}$ ou leur aryle-ester en $C_5$ à $C_{12}$, ou leurs anhydrides d'acides ou leurs chlorures d'acides.

**12.** Procédé selon au moins l'une quelconque des revendications précédentes, **caractérisé en ce qu'**on obtient un polymère sur la base de polyazole, lequel comporte des unités récurrentes d'azoles de la formule générale (I) et/ou (II) et/ou (III) et/ou (IV) et/ou (V) et/ou (VI) et/ou (VII) et/ou (VIII) et/ou (IX) et/ou (X) et/ou (XI) et/ou (XII) et/ou (XIII) et/ou (XIV) et/ou (XV) et/ou (XVI) et/ou (XVI) et/ou (XVII) et/ou (XVIII) et/ou (XIX) et/ou (XX) et/ou (XXI) et/ou (XXII)

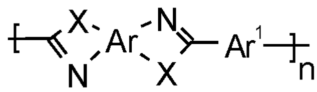

(I)

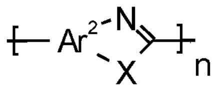

(II)

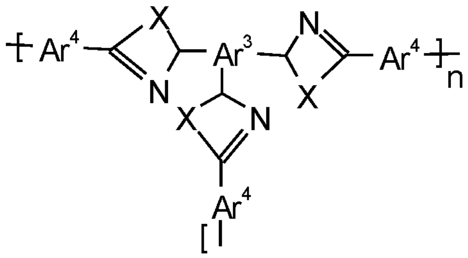

(III)

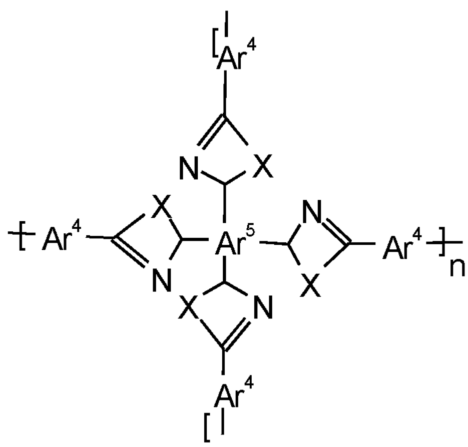

(IV)

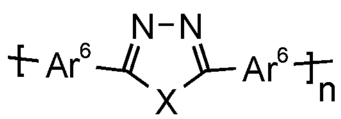

(V)

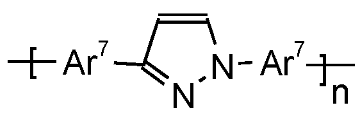

(VI)

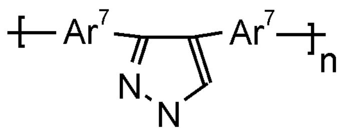

(VII)

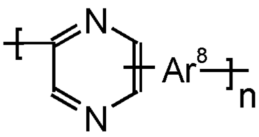

(VIII)

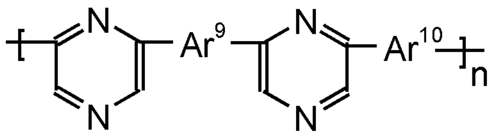

(IX)

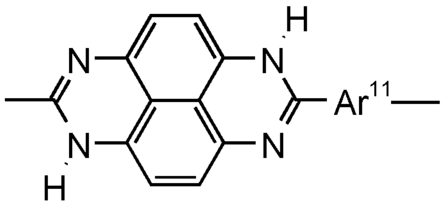

(X)

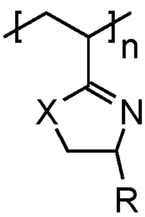

(XI)

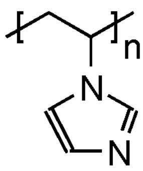

(XII)

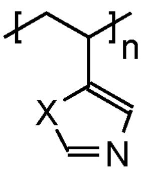

(XIII)

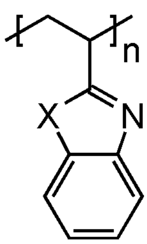

(XIV)

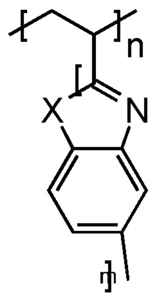

(XV)

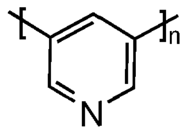

(XVI)

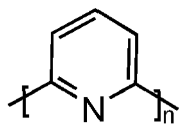

(XVII)

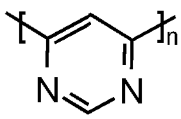

(XVIII)

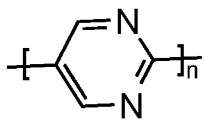

(XIX)

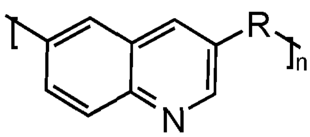

(XX)

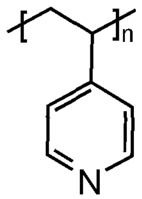

(XXI)

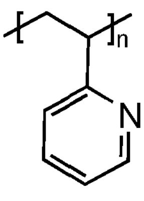

(XXII)

dans lesquelles

Ar sont identiques ou différents et correspondent à un groupe aromatique ou hétéroaromatique tétravalent, pouvant être mononucléaire ou polynucléaire,

$Ar^1$ sont identiques ou différents et correspondent à un groupe aromatique ou hétéroaromatique divalent, pouvant être mononucléaire ou polynucléaire,
$Ar^2$ sont identiques ou différents et correspondent à un groupe aromatique ou hétéroaromatique bivalent ou trivalent, pouvant être mononucléaire ou polynucléaire,
$Ar^3$ sont identiques ou différents et correspondent à un groupe aromatique ou hétéroaromatique trivalent, pouvant être mononucléaire ou polynucléaire,
$Ar^4$ sont identiques ou différents et correspondent à un groupe aromatique ou hétéroaromatique trivalent, pouvant être mononucléaire ou polynucléaire,
$Ar^5$ sont identiques ou différents et correspondent à un groupe aromatique ou hétéroaromatique tétravalent, pouvant être mononucléaire ou polynucléaire,
$Ar^6$ sont identiques ou différents et correspondent à un groupe aromatique ou hétéroaromatique divalent, pouvant être mononucléaire ou polynucléaire,
$Ar^7$ sont identiques ou différents et correspondent à un groupe aromatique ou hétéroaromatique divalent, pouvant être mononucléaire ou polynucléaire,
$Ar^8$ sont identiques ou différents et correspondent à un groupe aromatique ou hétéroaromatique trivalent, pouvant être mononucléaire ou polynucléaire,
$Ar^9$ sont identiques ou différents et correspondent à un groupe aromatique ou hétéroaromatique divalent, trivalent ou tétravalent, pouvant être mononucléaire ou polynucléaire,
$Ar^{10}$ sont identiques ou différents et correspondent à un groupe aromatique ou hétéroaromatique divalent ou trivalent, pouvant être mononucléaire ou polynucléaire,
$Ar^{11}$ sont identiques ou différents et correspondent à un groupe aromatique ou hétéroaromatique divalent, pouvant être mononucléaire ou polynucléaire,
X sont identiques ou différents et correspondent à l'oxygène, au soufre ou à un groupe amino, portant en tant qu'autre reste un atome d'hydrogène, un groupe comportant des atomes de carbone en 1 à 20, de préférence un groupe alkyle ou alkoxy réticulé ou non réticulé ou un groupe aryle
R identique ou différent, correspond à l'hydrogène, un groupe alkyle et un groupe aromatique, dans la formule (XX), R n'étant pas l'hydrogène, et
n, m est un nombre entier supérieur ou égal à 10, de préférence supérieur ou égal à 100.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9613872 A
- WO 2008031554 A
- WO 03022412 A
- WO 9904445 A
- WO 02088219 A
- DE 10246459 A1
- WO 0208829 A
- DE 10213540 A1
- DE 10246559 A1
- DE 10246461 A1


### In der Beschreibung aufgeführte Nicht-Patentliteratur


- **GANG, XIAO ; HJULER, H. A. ; OLSEN, C. ; BERG, R. W. ; BJERRUM, N. J.** Electrolyte additives for phosphoric acid fuel cells. Chem. Dep. A
- **LYNGBY, DEN.** *J. Electrochem. Soc.,* 1993, vol. 140 (4), 896-902
- Perfluorosulfonimide as an additive in phosphoric acid fuel cell. **RAZAQ, M. ; RAZAQ, A. ; YEAGER, E. ; DESMARTEAU, DARRYL D. ; SINGH, S.** J. Electrochem. Soc. Case Cent. Electrochem. Sci, 1989, vol. 136, 385-90
- Grundlagen: Struktur - Synthese - Eigenschaften. **HANS-GEORG ELIAS.** Makromoleküle. 1990, vol. 1
- **HÜTHIG ; WEPF.** Umsatz und Polymerisationsgrad
- **GANG, XIAO ; HJULER, H. A. ; OLSEN, C. ; BERG, R. W. ; BJERRUM, N. J.** Electrolyte additives for phosphoric acid fuel cells. Chem. Dep. A, 1993, vol. 140, 896-902
- **RAZAQ, M. ; RAZAQ, A. ; YEAGER, E. ; DESMARTEAU, DARRYL D. ; SINGH, S.** Perfluorosulfonimide as an additive in phosphoric acid fuel cell. Case Cent. Electrochem. Sci, 1989, vol. 136, 385-90